# EUROPEAN PATENT APPLICATION

(11) **EP 4 390 756 A1**
(43) Date of publication of application: **26.06.2024**
(21) Application number: 22869080.6
(22) Date of filing: 06.09.2022
(51) Int. Cl.: G06K 7/10

(54) **POWER CONTROL METHOD, APPARATUS AND SYSTEM**

(30) Priority: 18.09.2021 CN 202111111304
(71) Applicant: Huawei Technologies Co., Ltd., Shenzhen, Guangdong 518129 (CN)
(72) Inventor: LU, Zhenwei, Shenzhen, Guangdong 518129 (CN); WU, Yiling, Shenzhen, Guangdong 518129 (CN); CHEN, Jun, Shenzhen, Guangdong 518129 (CN)
(74) Representative: Isarpatent
(86) International application number: PCT/CN2022/117369
(87) International publication number: WO 2023/040709

(57) **Abstract**

This application provides a power control method, an apparatus, and a system, to ensure a coverage area as much as possible while reducing interference to transmission in a first communication network, and reduce deployment costs and complexity of interference coordination between first devices while ensuring the coverage area. The method includes: A first device sends an excitation signal to a terminal device at a first power; and sends a communication signal to the terminal device at a second power, where the communication signal is used to bear information, and the second power is less than the first power. At least one of the first power and the second power may be indicated by a second device to the first device.

## Description

This application claims priority to Chinese Patent Application No. 202111111304.1, filed with the China National Intellectual Property Administration on September 18, 2021 and entitled "POWER CONTROL METHOD, APPARATUS, AND SYSTEM", which is incorporated herein by reference in its entirety.

### TECHNICAL FIELD

Embodiments of this application relate to the wireless communication field, and in particular, to a power control method, an apparatus, and a system.

### BACKGROUND

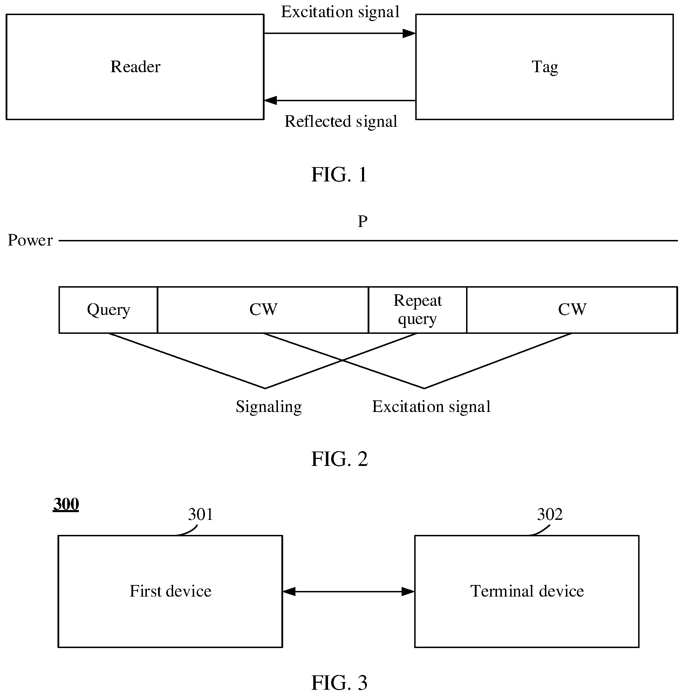

A radio frequency identification (radio frequency identification, RFID) technology is a non-contact automatic identification technology. As shown in FIG. 1, an RFID system usually includes a reader (reader) and a tag (tag). The reader may send an excitation signal to the tag. The excitation signal may serve as a carrier of a reflected signal and bear information such as an identifier of the tag. After receiving the reflected signal, the reader may obtain the information such as the identifier of the tag.

In addition, the reader may further send signaling to the tag. For example, as shown in FIG. 2, the reader continuously sends excitation signals or signaling to the tag at a same power P in a period of time. The excitation signal is a continuous wave (continuous wave, CW), and the signaling includes query (Query) signaling and repeat query (QueryRep) signaling.

At present, with development of mobile communication technologies, the RFID system may coexist with a new radio (new radio, NR) system. When the RFID system coexists with the NR system, the reader occupies some NR resources to send excitation signals or signaling to the tag, for example, occupies one physical resource block (physical resource block, PRB), and uses remaining NR resources for NR transmission. However, in frequency domain, the some NR resources occupied by the reader may be adjacent to or have a small interval (for example, an interval of one or two PRBs) with the NR resources used for NR transmission. Consequently, the excitation signals or the signaling sent by the reader to the tag on the NR resources occupied by the reader causes interference to NR transmission.

To reduce interference to NR transmission, the reader needs to reduce a transmit power. However, after the transmit power is reduced, a coverage area of the reader is reduced. As a result, locations of some tags may not be covered or have quite weak coverage signals. To resolve a problem of reduction in the coverage area, readers may need to be deployed more densely. Consequently, deployment costs and complexity of interference coordination between readers are increased.

### SUMMARY

This application provides a power control method, an apparatus, and a system, to ensure a coverage area as much as possible while reducing interference to transmission in a first communication network, and reduce deployment costs and complexity of interference coordination between first devices while ensuring the coverage area.

According to a first aspect, a power control method is provided. The method may be performed by a first device; may be performed by a component of a first device, for example, a processor, a chip, or a chip system of the first device; or may be implemented by a logical module or software that can implement all or some functions of a first device. The method includes: sending an excitation signal to a terminal device at a first power; and sending a communication signal to the terminal device at a second power, where the communication signal is used to bear information, and the second power is less than the first power.

According to this solution, the first device sends the excitation signal at the first power, and sends the communication signal at the second power, where the second power may be less than the first power. In one aspect, a receive threshold of the excitation signal is a bottleneck of a coverage area, and the excitation signal is sent at a higher first power. When the terminal device is quite far from the first device, the power of the excitation signal received by the terminal device may be greater than the receive threshold of the excitation signal as much as possible, so that the terminal device can normally work and the coverage area is maintained as much as possible. In addition, because the excitation signal is a monophonic signal, sending the excitation signal at the higher first power causes less interference to transmission in a first communication network compared with sending the communication signal at the first power. In another aspect, because the communication signal is a non-monophonic signal, sending the communication signal at a lower second power can reduce interference to transmission in the first communication network compared with sending the communication signal at the first power. Moreover, a receive threshold of the communication signal needs to be lower than the receive threshold of the excitation signal, the terminal device can normally work after receiving the excitation signal, and can normally receive the communication signal when the transmit power of the communication signal is properly reduced. Therefore, properly reducing the transmit power of the communication signal does not affect an overall coverage area.

With reference to the first aspect, in some implementations of the first aspect, the method further includes: receiving first indication information from a second device, where the first indication information indicates at least one of the first power and the second power.

In this implementation, the second device may control at least one of the transmit power of the excitation signal and the transmit power of the communication signal. Compared with a solution in which the excitation signal or the communication signal is sent at a constant power, this implementation can improve flexibility.

With reference to the first aspect, in some implementations of the first aspect, the method further includes: receiving second indication information from a second device, where the second indication information indicates a first parameter; and determining at least one of the first power and the second power based on the first parameter. The first parameter includes at least one of a first coexistence mode and a first coverage level, the first coexistence mode is a coexistence mode between the first device and a first communication network, and the first coverage level is used to indicate a size of a coverage area of the first device.

In this implementation, the second device can control the first device to use different transmit powers in different coexistence modes or at different coverage levels, and a transmission rate can be increased at a power as high as possible while reducing interference to the first communication network.

With reference to the first aspect, in some implementations of the first aspect, the method further includes: receiving first configuration information from the second device, where the first configuration information is used to configure a correspondence between a parameter in a first parameter set and a power, and the first parameter set includes the first parameter. The determining at least one of the first power and the second power based on the first parameter includes: determining the at least one of the first power and the second power based on the first parameter and the correspondence between a parameter in the first parameter set and a power.

With reference to the first aspect, in some implementations of the first aspect, the method further includes: receiving third indication information from a second device, where the third indication information indicates at least one of the first power and a difference between the first power and the second power, and determining the second power based on the first power and the difference; or the third indication information indicates at least one of the second power and a difference between the first power and the second power, and determining the first power based on the second power and the difference.

In this implementation, the second device may control at least one of the transmit power of the excitation signal and the transmit power of the communication signal by using the difference. Compared with a solution in which the excitation signal or the communication signal is sent at a constant power, this implementation can improve flexibility.

With reference to the first aspect, in some implementations of the first aspect, the method further includes: receiving fourth indication information from a second device, where the fourth indication information indicates a second parameter; and determining a third parameter based on the second parameter, where the third parameter includes at least one of the first power and a difference between the first power and the second power, and determining the second power based on the first power and the difference; or determining a fourth parameter based on the second parameter, where the fourth parameter includes at least one of the second power and a difference between the first power and the second power, and determining the first power based on the second power and the difference. The second parameter includes at least one of a second coexistence mode and a second coverage level, the second coexistence mode is a coexistence mode between the first device and a first communication network, and the second coverage level is used to indicate a size of a coverage area of the first device.

In this implementation, the second device can control the first device to use different transmit powers in different coexistence modes or at different coverage levels, and a transmission rate can be increased at a power as high as possible while reducing interference to the first communication network.

With reference to the first aspect, in some implementations of the first aspect, the method further includes: receiving second configuration information from the second device, where
the second configuration information is used to configure a correspondence between a parameter in a second parameter set and a parameter in a third parameter set, the second parameter set includes the second parameter, and the third parameter set includes the third parameter; and the determining a third parameter based on the second parameter includes: determining the third parameter based on the second parameter and the correspondence between a parameter in the second parameter set and a parameter in the third parameter set; or
the second configuration information is used to configure a correspondence between a parameter in a second parameter set and a parameter in a fourth parameter set, the second parameter set includes the second parameter, and the fourth parameter set includes the fourth parameter; and the determining a fourth parameter based on the second parameter includes: determining the fourth parameter based on the second parameter and the correspondence between a parameter in the second parameter set and a parameter in the fourth parameter set.

With reference to the first aspect, in some implementations of the first aspect, the sending an excitation signal to a terminal device at a first power includes: sending the excitation signal to the terminal device on a first frequency domain resource at the first power; and the sending a communication signal to the terminal device at a second power includes: sending the communication signal to the terminal device on a second frequency domain resource at the second power; where bandwidths of the first frequency domain resource and the second frequency domain resource are integer multiples of a bandwidth of a frequency domain resource unit of the first communication network.

According to a second aspect, a power control method is provided. The method may be performed by a second device; may be performed by a component of a second device, for example, a processor, a chip, or a chip system of the second device; or may be implemented by a logical module or software that can implement all or some functions of a second device. The method includes: determining indication information; and sending the indication information to a first device. The indication information is used to determine a signal transmit power of the first device, the signal transmit power includes at least one of a first power and a second power, the first power is a power of an excitation signal, the second power is a power of a communication signal, the communication signal is used to bear information, and the second power is not greater than the first power.

According to this solution, the second device may control the signal transmit power of the first device by using the indication information. Compared with a solution in which the excitation signal or the communication signal is sent at a constant power, this solution can improve flexibility. In addition, when the second power is less than the first power, a coverage area can be ensured as much as possible while reducing interference to transmission in a first communication network. For details, refer to analysis of technical effects brought by the first aspect. Details are not described herein again.

With reference to the second aspect, in some implementations of the second aspect, that the second power is not greater than the first power includes: the second power is less than the first power.

With reference to the second aspect, in some implementations of the second aspect, the indication information is first indication information, and the first indication information indicates the signal transmit power.

With reference to the second aspect, in some implementations of the second aspect, the indication information is second indication information, the second indication information indicates a first parameter, the first parameter includes at least one of a first coexistence mode and a first coverage level, the first coexistence mode is a coexistence mode between the first device and a first communication network, the first coverage level is used to indicate a size of a coverage area of the first device, and the first parameter is used to determine the signal transmit power.

With reference to the second aspect, in some implementations of the second aspect, the method further includes: sending first configuration information to the first device, where the first configuration information is used to configure a correspondence between a parameter in a first parameter set and a power, and the first parameter set includes the first parameter.

With reference to the second aspect, in some implementations of the second aspect, the indication information is third indication information, and the third indication information indicates the first power and a difference between the first power and the second power; or the third indication information indicates the second power and a difference between the first power and the second power.

With reference to the second aspect, in some implementations of the second aspect, the indication information is fourth indication information, the fourth indication information indicates a second parameter, the second parameter includes at least one of a second coexistence mode and a second coverage level, the second coexistence mode is a coexistence mode between the first device and a first communication network, the second coverage level is used to indicate a size of a coverage area of the first device, the second parameter is used to determine a third parameter or a fourth parameter, the third parameter includes at least one of the first power and a difference between the first power and the second power, and the fourth parameter includes at least one of the second power and a difference between the first power and the second power.

With reference to the second aspect, in some implementations of the second aspect, the method further includes: sending second configuration information to the first device, where the second configuration information is used to configure a correspondence between a parameter in a second parameter set and a parameter in a third parameter set, the second parameter set includes the second parameter, and the third parameter set includes the third parameter; or the second configuration information is used to configure a correspondence between a parameter in a second parameter set and a parameter in a fourth parameter set, the second parameter set includes the second parameter, and the fourth parameter set includes the fourth parameter.

For technical effects brought by the implementations of the second aspect, refer to the technical effects brought by the corresponding implementations of the first aspect. Details are not described herein again.

According to a third aspect, a power control method is provided. The method may be performed by a first device; may be performed by a component of a first device, for example, a processor, a chip, or a chip system of the first device; or may be implemented by a logical module or software that can implement all or some functions of a first device. The method includes: receiving indication information from a second device, and determining a signal transmit power based on the indication information, where the signal transmit power includes at least one of a first power and a second power, and the second power is not greater than the first power; and sending an excitation signal to a terminal device at a first power; and sending a communication signal to the terminal device at a second power, where the communication signal is used to bear information.

According to this solution, the first device can determine the at least one of the first power and the second power based on an indication of the second device. Compared with a solution in which the excitation signal or the communication signal is sent at a constant power, this solution can improve flexibility. In addition, when the second power is less than the first power, a coverage area can be ensured as much as possible while reducing interference to transmission in a first communication network. For details, refer to analysis of technical effects brought by the first aspect. Details are not described herein again.

With reference to the third aspect, in some implementations of the third aspect, that the second power is not greater than the first power includes: the second power is less than the first power.

With reference to the third aspect, in some implementations of the third aspect, the indication information is first indication information, and the first indication information indicates the signal transmit power.

With reference to the third aspect, in some implementations of the third aspect, the indication information is second indication information, the second indication information indicates a first parameter, the first parameter includes at least one of a first coexistence mode and a first coverage level, the first coexistence mode is a coexistence mode between the first device and a first communication network, and the first coverage level is used to indicate a size of a coverage area of the first device. The determining a signal transmit power based on the indication information includes: determining the signal transmit power based on the first parameter.

With reference to the third aspect, in some implementations of the third aspect, the method further includes: receiving first configuration information from the second device, where the first configuration information is used to configure a correspondence between a parameter in a first parameter set and a power, and the first parameter set includes the first parameter. The determining the signal transmit power based on the first parameter includes: determining the signal transmit power based on the first parameter and the correspondence between a parameter in the first parameter set and a power.

With reference to the third aspect, in some implementations of the third aspect, the indication information is third indication information, the third indication information indicates at least one of the first power and a difference between the first power and the second power, and the determining a signal transmit power based on the indication information includes: determining the second power based on the first power and the difference; or the third indication information indicates at least one of the second power and a difference between the first power and the second power, and the determining a signal transmit power based on the indication information includes: determining the first power based on the second power and the difference.

With reference to the third aspect, in some implementations of the third aspect, the indication information is fourth indication information, the fourth indication information indicates a second parameter, the second parameter includes at least one of a second coexistence mode and a second coverage level, the second coexistence mode is a coexistence mode between the first device and a first communication network, and the second coverage level is used to indicate a size of a coverage area of the first device. The determining a signal transmit power based on the indication information includes: determining a third parameter based on the second parameter, where the third parameter includes at least one of the first power and a difference between the first power and the second power, and determining the second power based on the first power and the difference; or determining a fourth parameter based on the second parameter, where the fourth parameter includes at least one of the second power and a difference between the first power and the second power, and determining the first power based on the second power and the difference.

With reference to the third aspect, in some implementations of the third aspect, the method further includes: receiving second configuration information from the second device, where
the second configuration information is used to configure a correspondence between a parameter in a second parameter set and a parameter in a third parameter set, the second parameter set includes the second parameter, and the third parameter set includes the third parameter; and the determining a third parameter based on the second parameter includes: determining the third parameter based on the second parameter and the correspondence between a parameter in the second parameter set and a parameter in the third parameter set; or
the second configuration information is used to configure a correspondence between a parameter in a second parameter set and a parameter in a fourth parameter set, the second parameter set includes the second parameter, and the fourth parameter set includes the fourth parameter; and the determining a fourth parameter based on the second parameter includes: determining the fourth parameter based on the second parameter and the correspondence between a parameter in the second parameter set and a parameter in the fourth parameter set.

With reference to the third aspect, in some implementations of the third aspect, the sending an excitation signal to a terminal device at a first power includes: sending the excitation signal to the terminal device on a first frequency domain resource at the first power; and the sending a communication signal to the terminal device at a second power includes: sending the communication signal to the terminal device on a second frequency domain resource at the second power; where bandwidths of the first frequency domain resource and the second frequency domain resource are integer multiples of a bandwidth of a frequency domain resource unit of the first communication network.

For technical effects brought by the implementations of the third aspect, refer to the technical effects brought by the corresponding implementations of the first aspect. Details are not described herein again.

According to a fourth aspect, a communication apparatus is provided to implement the foregoing methods. The communication apparatus may be the first device in the first aspect, an apparatus including the first device, or an apparatus included in the first device, for example, a chip. Alternatively, the communication apparatus may be the second device in the second aspect, an apparatus including the second device, or an apparatus included in the second device. The communication apparatus includes corresponding modules, units, or means (means) for implementing the foregoing methods. The modules, units, or means may be implemented by using hardware, implemented by using software, or implemented by hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface. The processing module may be configured to implement a processing function in any one of the foregoing aspects and the possible implementations of the foregoing aspects.

In some possible designs, the transceiver module includes a sending module and a receiving module, respectively configured to implement the sending function and the receiving function in any one of the foregoing aspects and the possible implementations of the foregoing aspects.

According to a fifth aspect, a communication apparatus is provided, including a processor and a memory. The memory is configured to store computer instructions. When the processor executes the instructions, the communication apparatus is enabled to perform the method in any one of the foregoing aspects. The communication apparatus may be the first device in the first aspect, an apparatus including the first device, or an apparatus included in the first device, for example, a chip. Alternatively, the communication apparatus may be the second device in the second aspect, an apparatus including the second device, or an apparatus included in the second device.

According to a sixth aspect, a communication apparatus is provided, including a processor and a communication interface. The communication interface is configured to communicate with a module outside the communication apparatus. The processor is configured to execute a computer program or instructions, so that the communication apparatus performs the method in any one of the foregoing aspects. The communication apparatus may be the first device in the first aspect, an apparatus including the first device, or an apparatus included in the first device, for example, a chip. Alternatively, the communication apparatus may be the second device in the second aspect, an apparatus including the second device, or an apparatus included in the second device.

According to a seventh aspect, a communication apparatus is provided, including at least one processor. The processor is configured to execute a computer program or instructions stored in a memory, so that the communication apparatus performs the method in any one of the foregoing aspects. The memory may be coupled to the processor, or may be independent of the processor. The communication apparatus may be the first device in the first aspect, an apparatus including the first device, or an apparatus included in the first device, for example, a chip. Alternatively, the communication apparatus may be the second device in the second aspect, an apparatus including the second device, or an apparatus included in the second device.

According to an eighth aspect, a computer-readable storage medium is provided. The computer-readable storage medium stores a computer program or instructions. When the computer program or instructions are run on a communication apparatus, the communication apparatus is enabled to perform the method in any one of the foregoing aspects.

According to a ninth aspect, a computer program product including instructions is provided. When the computer program product runs on a communication apparatus, the communication apparatus is enabled to perform the method in any one of the foregoing aspects.

According to a tenth aspect, a communication apparatus (for example, the communication apparatus may be a chip or a chip system) is provided. The communication apparatus includes a processor, configured to implement functions in any one of the foregoing aspects.

In some possible designs, the communication apparatus includes a memory. The memory is configured to store necessary program instructions and data.

In some possible designs, when the apparatus is a chip system, the apparatus may include a chip, or may include a chip and another discrete device.

It can be understood that when the communication apparatus provided in any one of the fourth aspect to the tenth aspect is a chip, the foregoing sending action/function can be understood as output, and the foregoing receiving action/function can be understood as input.

For technical effects brought by any design manner in the fourth aspect to the tenth aspect, refer to the technical effects brought by different design manners in the first aspect or the second aspect. Details are not described herein again.

According to an eleventh aspect, a communication system is provided. The communication system includes the first device in the foregoing aspects. In some possible designs, the communication system may further include the second device in the foregoing aspects.

According to a twelfth aspect, a communication apparatus is provided, including units configured to perform the method in any embodiment of this application.

### BRIEF DESCRIPTION OF DRAWINGS

FIG. 1 is a schematic diagram of a communication signal between a reader and a tag according to an embodiment of this application;
FIG. 2 is a schematic diagram of a power when a reader sends signaling and excitation signals according to an embodiment of this application;
FIG. 3 is a schematic diagram of a structure of a communication system according to an embodiment of this application;
FIG. 4 is a schematic diagram of a structure of another communication system according to an embodiment of this application;
FIG. 5 is a schematic diagram of a structure of still another communication system according to an embodiment of this application;
FIG. 6 is a schematic diagram of a structure of a communication apparatus according to an embodiment of this application;
FIG. 7 is a schematic flowchart of a power control method according to an embodiment of this application;
FIG. 8 is a schematic diagram of a power used when a first device sends excitation signals and a communication signal according to an embodiment of this application;
FIG. 9 is a schematic flowchart of another power control method according to an embodiment of this application;
FIG. 10 is a schematic diagram of a structure of a first device according to an embodiment of this application; and
FIG. 11 is a schematic diagram of a structure of a second device according to an embodiment of this application.

### DESCRIPTION OF EMBODIMENTS

In the descriptions of embodiments of this application, unless otherwise specified, "a plurality of" means two or more. "At least one of the following items (pieces)", "one or more items", or a similar expression thereof means any combination of these items, including a singular item (piece) or any combination of plural items (pieces). For example, at least one item (piece) of a, b, or c may represent a; b; c; a and b; a and c; b and c; or a, b, and c, where a, b, and c each may be in a singular or plural form.

In addition, for ease of clear description of technical solutions in embodiments of this application, terms such as "first" and "second" are used in embodiments of this application to distinguish between same items having a basically same function and effect or similar items. A person skilled in the art can understand that the terms such as "first" and "second" are not used to limit a quantity and an execution sequence, and that the terms such as "first" and "second" do not indicate a definite difference. Moreover, in embodiments of this application, a term "example", "for example", or the like is used to represent giving an example, an illustration, or a description. Any embodiment or design scheme described as "example" or "for example" in embodiments of this application should not be construed as being preferred or having more advantages over other embodiments or design schemes. Exactly, use of a term "example", "for example", or the like is intended to present a related concept in a specific manner for ease of understanding.

It can be understood that "an embodiment" mentioned throughout this specification indicates that particular features, structures, or characteristics related to this embodiment are included in at least one embodiment of this application. Therefore, embodiments in the entire specification are unnecessarily a same embodiment. Moreover, these particular features, structure, or characteristics may be combined in one or more embodiments in any appropriate manner.

It can be understood that sequence numbers of processes do not mean execution sequences in various embodiments of this application. The execution sequences of the processes should be determined based on functions and internal logic of the processes, and should not be construed as any limitation on implementation processes of embodiments of this application.

It can be understood that in embodiments of this application, "when", "if" or a similar expression thereof means that corresponding processing is performed in an objective situation, is not intended to limit time, do not need a determining action during implementation, and do not mean any other limitation.

It can be understood that, in some scenarios, some optional features in embodiments of this application may be independently implemented without depending on other features, for example, a solution on which the optional features are currently based, to resolve a corresponding technical issue and achieve a corresponding effect. Alternatively, in some scenarios, the optional features may be combined with other features depending on requirements.

In embodiments of this application, unless otherwise specified, for same or similar parts in embodiments, refer to each other. In embodiments of this application and implementations/implementation methods/implementation manners in embodiments, unless otherwise specified or a logical conflict occurs, terms and/or descriptions are consistent and may be mutually referenced between different embodiments and between implementations/implementation methods in embodiments. Technical features in different embodiments and implementations/implementation methods in embodiments may be combined to form a new embodiment, implementation, implementation method or implementation manner based on an internal logical relationship thereof. The following implementations of this application are not intended to limit the protection scope of this application.

The technical solutions in embodiments of this application can be applied to various communication scenarios, for example, vehicle-to-everything (vehicle to everything, V2X), device-to-device (device-to-device, D2D), machine-to-machine (machine to machine, M2M), an Internet of things (internet of things, IoT), wireless fidelity (wireless fidelity, Wi-Fi), and worldwide interoperability for microwave access (Worldwide Interoperability for Microwave Access, WiMAX). This is not limited.

The communication scenarios to which this application is applicable are merely examples for description, and are not limited thereto. Unified descriptions are provided herein, and are not described in the following.

FIG. 3 is a schematic diagram of an architecture of a possible communication system 300 to which an embodiment of this application is applicable. As shown in FIG. 3, the communication system includes a first device 301 and a terminal device 302. The first device 301 has a capability of sending an excitation signal and a communication signal to the terminal device 302.

Optionally, the excitation signal has at least one of the following functions: serving as a carrier of a reflected signal sent by the terminal device; or providing energy for the terminal device, so that the terminal device performs internal processing such as encoding, decoding, modulation, and demodulation.

Optionally, after receiving the excitation signal from the first device 301, the terminal device 302 may send a reflected signal to the first device 301. The reflected signal may carry internal information such as an identifier of the terminal device 302.

In a specific example, the first device 301 may be a reader (reader) or a reader/writer, and the terminal device 302 may be a tag, or a device including a tag.

In this application, unless otherwise specified, the reader (or the reader/writer) is a reader (or a reader/writer) in an RFID technology, or a related derivative technology of the RFID, or a future evolved RFID technology. The tag is a tag (or referred to as an electronic tag) in the RFID technology, or the related derivative technology of the RFID, or the future evolved RFID technology. The tag may be a passive tag, or may be a semi-passive tag. This is not limited.

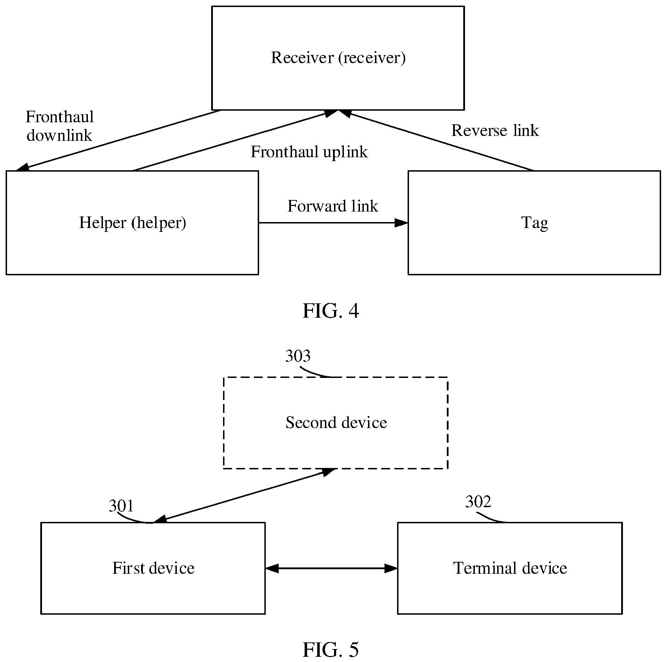

Optionally, in a split architecture, as shown in FIG. 4, the reader may include a helper (helper) and a receiver (receiver). A link from the helper to the tag may be referred to as a forward link or a downlink, a link from the tag to the receiver may be referred to as a reverse link or an uplink, a link from the receiver to the helper may be referred to as a fronthaul downlink, and a link from the helper to the receiver may be referred to as a fronthaul uplink.

The helper is mainly configured to send an excitation signal to the tag over the forward link, and a reflected signal of the tag is received by the receiver over the reverse link. In addition, the receiver may generate RFID-related signaling and send the RFID-related signaling to the helper over the fronthaul downlink, and then the helper forwards the RFID-related signaling to the tag over the forward link.

Based on the split architecture shown in FIG. 4, in another specific example, the first device 301 may be a helper, and the terminal device 302 may be a tag, or a device including a tag.

Optionally, as shown in FIG. 5, in addition to the first device 301 and the terminal device 302, the communication system may further include a second device 303. The second device 303 may be used as a centralized control unit to control a sending behavior of the first device 301, schedule sending resources for the first device 301, and the like.

Optionally, a link from the second device 303 to the first device 301 may be referred to as a fronthaul downlink, and a link from the first device 301 to the second device 303 may be referred to as a fronthaul uplink.

In a specific example, the second device 303 may be a radio access network device. Alternatively, based on the split architecture shown in FIG. 4, the second device 303 may be a receiver. The radio access network device may be an evolved NodeB (evolutional NodeB, eNB or eNodeB) in long term evolution (long term evolution, LTE) or LTE-Advanced (LTE-Advanced, LTE-A), for example, a conventional macro base station eNB and a micro base station eNB in a heterogeneous network scenario; may be a next generation NodeB (next generation NodeB, gNodeB or gNB) in NR; or may be a base station in a future evolved public land mobile network (public land mobile network, PLMN). This is not limited.

Related functions of the first device, the terminal device, or the second device in this application may be implemented by one device, may be jointly implemented by a plurality of devices, may be implemented by one or more functional modules in one device, may be implemented by one or more chips, or may be implemented by a system on chip (system on chip, SOC) or a chip system. The chip system may include a chip, or may include a chip and another discrete device. This is not specifically limited in embodiments of this application.

It can be understood that the function may be a network element in a hardware device, a software function running on dedicated hardware, a combination of hardware and software, or may be a virtualized function instantiated on a platform (for example, a cloud platform).

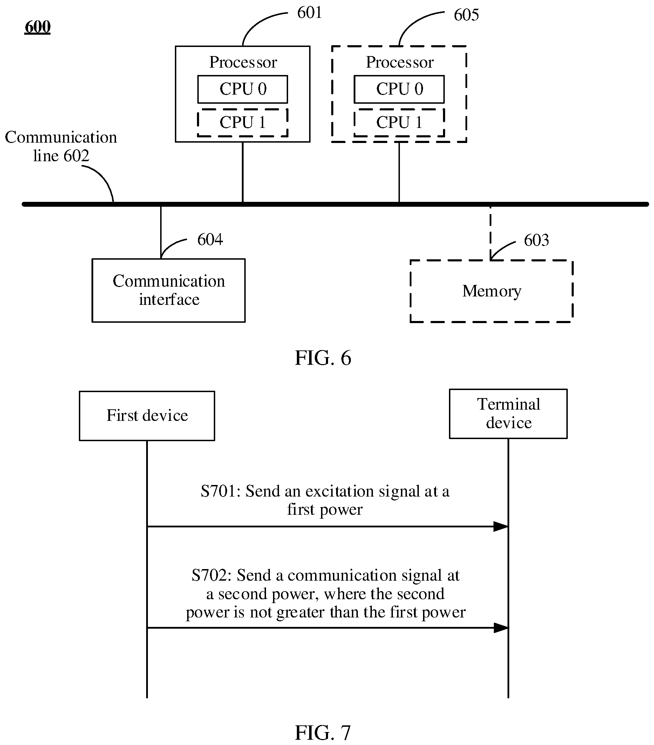

For example, the related functions of the first device, the terminal device, or the second device in this application may be implemented by a communication apparatus 600 in FIG. 6. FIG. 6 is a schematic diagram of a structure of the communication apparatus 600 according to an embodiment of this application. The communication apparatus 600 includes one or more processors 601, a communication line 602, and at least one communication interface (that only a communication interface 604 and one processor 601 are included in FIG. 6 is used as an example for description), and may optionally further include a memory 603.

The processor 601 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 602 may be used for communication between different components included in the communication apparatus 600.

The communication interface 604 may be a transceiver module configured to communicate with another device or a communication network. The transceiver module may be an apparatus, like a transceiver or a transceiver machine. Optionally, the communication interface 604 may alternatively be a transceiver circuit located in the processor 601, and is configured to implement signal input and signal output of the processor.

The memory 603 may be an apparatus having a storage function. For example, the memory 603 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM), other optical disk storage, optical disc storage (including a compact disc, a laser disc, an optical disc, a digital versatile disc, a Blu-ray disc, and the like), a magnetic disk storage medium, another magnetic storage device, or any other medium that can be used to carry or store expected program code in a form of an instruction or a data structure and that is accessible by a computer. However, no limitation is imposed thereto. The memory may exist independently, and is connected to the processor through the communication line 602. Alternatively, the memory may be integrated with the processor.

Optionally, the memory 603 may be configured to store computer-executable instructions for performing the solutions in this application, and the processor 601 controls execution of the computer-executable instructions. The processor 601 is configured to execute the computer-executable instructions stored in the memory 603, to implement the methods provided in embodiments of this application.

Optionally, in this embodiment of this application, the processor 601 may perform processing-related functions in the methods provided in the following embodiments of this application, and the communication interface 604 is responsible for communicating with another device or a communication network. This is not specifically limited in embodiments of this application.

Optionally, the computer-executable instructions in this embodiment of this application may also be referred to as application program code. This is not specifically limited in embodiments of this application.

During specific implementation, in an embodiment, the processor 601 may include one or more CPUs, for example, a CPU 0 and a CPU 1 in FIG. 6.

During specific implementation, in an embodiment, the communication apparatus 600 may include a plurality of processors, for example, the processor 601 and a processor 605 in FIG. 6. Each of these processors may be a single-core (single-core) processor, or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform computation or processing.

It should be noted that the composition structure shown in FIG. 6 does not constitute any limitation on the communication apparatus. In addition to the components shown in FIG. 6, the communication apparatus may include more or fewer components than those shown in the figure, a combination of some components, or a different arrangement of the components. The components shown in the figure may be implemented by using hardware, software, or a combination of software and hardware.

With development of mobile communication technologies, the communication system shown in FIG. 3 or FIG. 5 to which embodiments of this application are applicable may coexist with a first communication network. In other words, the first device may occupy some resources of the first communication network to send a signal to the terminal device. In this case, signal transmission in the communication system to which embodiments of this application are applicable may cause interference to transmission in the first communication network. When a transmit power is reduced to reduce interference, a coverage area is reduced. To resolve a problem of reduction in the coverage area, deployment costs and complexity of interference coordination between readers are increased.

Optionally, the first communication network may be a mobile communication network. For example, the first communication network may be an NR network, a long term evolution (long term evolution, LTE) network, an LTE-Advanced (LTE-Advanced, LTE-A) network, or a future evolved public land mobile network (public land mobile network, PLMN).

Based on this, this application provides a power control method, to ensure a coverage area as much as possible while reducing interference to transmission in the first communication network. When the coverage area is ensured, more first devices may not need to be deployed, so that deployment costs and complexity of interference coordination between first devices are reduced. With reference to the accompanying drawings, the following describes the methods provided in embodiments of this application.

It should be noted that names of information, names of parameters in the information, and the like in the following embodiments of this application are merely examples, and the names thereof may be other names during specific implementation. This is not specifically limited in embodiments of this application.

FIG. 7 shows a power control method according to an embodiment of this application. The power control method includes the following steps.

S701: A first device sends an excitation signal to a terminal device at a first power.

The excitation signal has at least one of the following functions: serving as a carrier of a reflected signal sent by the terminal device; or providing energy for the terminal device, so that the terminal device performs internal processing such as encoding, decoding, modulation, and demodulation.

Optionally, the first power may be a maximum transmit power of the first device. In other words, the first device sends the excitation signal to the terminal device at the maximum transmit power.

Optionally, that a first device sends an excitation signal to a terminal device at a first power may include: The first device sends the excitation signal to the terminal device on a first frequency domain resource at the first power.

S702: The first device sends a communication signal to the terminal device at a second power.

The communication signal is used to bear information. The information may be, for example, data and/or signaling. This is not specifically limited in this application.

The second power is not greater than the first power. To be specific, the second power is less than the first power, or the second power is equal to the first power.

Optionally, that the first device sends a communication signal to the terminal device at a second power may include: The first device sends the communication signal to the terminal device on a second frequency domain resource at the second power.

Optionally, the second frequency domain resource may be the same as or different from the first frequency domain resource. Bandwidths of the first frequency domain resource and the second frequency domain resource are integer multiples of a bandwidth of a frequency domain resource unit of a first communication network. The frequency domain resource unit may be a minimum allocation unit of a frequency domain resource. For example, when the first communication network is NR, the frequency domain resource unit may be a PRB, and a bandwidth of the frequency domain resource unit may be 180 kilohertz (kHz).

It should be noted that there is no strict execution sequence between steps S701 and S702. Step S701 may be performed before step S702, or step S702 may be performed before step S701. This is not specifically limited in this application.

Optionally, the first device may continuously send excitation signals and communication signals to the terminal device in a period of time. Assuming that the communication signal is sent in a first time period, the first device may always send the communication signals to the terminal device at the second power in the first time period.

If the excitation signal is sent in a second time period before the first time period (an end moment of the second time period is a start moment of the first time period), the first device may send the excitation signal at the first power in a former part of the second time period. In a latter part of the second time period, the first device may gradually reduce the transmit power of the excitation signal until the end moment of the second time period, reduce the power to the second power, and then send the communication signal at the second power.

If the excitation signal is sent in a third time period after the first time period (an end moment of the first time period is a start moment of the third time period), in a former part of the third time period, the first device may gradually increase the transmit power of the excitation signal from the second power until the first power is reached, and then send the excitation signal at the first power in a remaining part of the third time period.

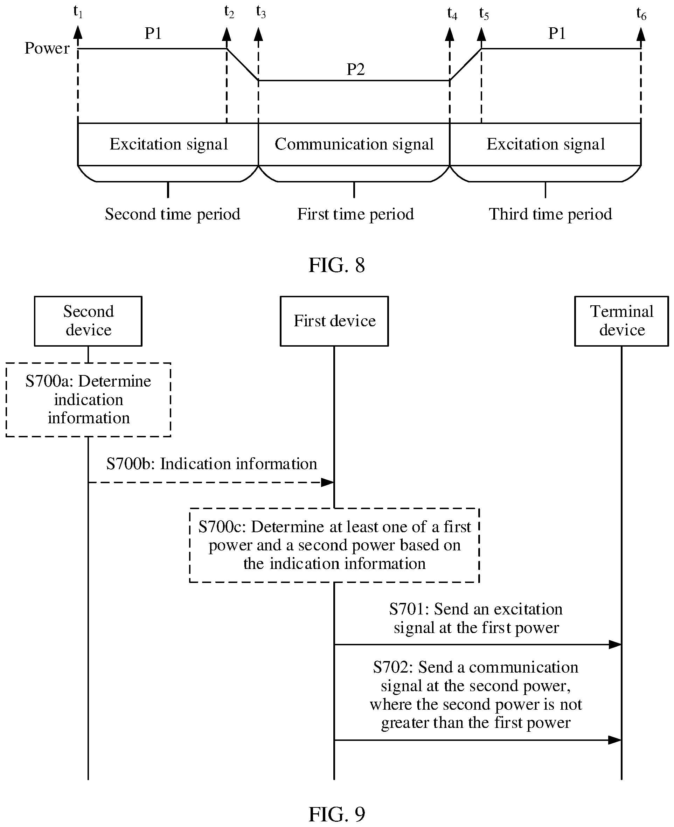

For example, as shown in FIG. 8, the first device sends a communication signal in the first time period, and sends excitation signals in the second time period and the third time period. During t1 to t2 of the second time period, the first device sends an excitation signal at the first power P1, gradually decreases the transmit power of the excitation signal from the moment t2 and decreases the transmit power to the second power P2 at a moment t3, and starts to send the communication signal at the second power P2. At a moment t4, sending of the communication signal is completed, and an excitation signal starts to be sent. In addition, the transmit power of the excitation signal is gradually increased from the second power P2 from the moment t4 to a moment t5, is increased to the first power P1 at the moment t5, and subsequently the excitation signal is sent at the first power P1 from the moment t5 to a moment t6.

Optionally, duration in which the power of the excitation signal is decreased from the first power to the second power may be less than or equal to a first threshold. Duration in which the power of the excitation signal is increased from the second power to the first power may be less than or equal to a second threshold. The first threshold may be equal to or unequal to the second threshold. The first threshold and the second threshold may be predefined in a protocol, indicated by a second device, or determined by the first device. This is not limited.

According to this solution, the first device sends the excitation signal at the first power, and sends the communication signal at the second power, where the second power may be less than the first power. In one aspect, a receive threshold of the excitation signal is a bottleneck of a coverage area, and the excitation signal is sent at a higher first power. When the terminal device is quite far from the first device, the power of the excitation signal received by the terminal device may be greater than the receive threshold of the excitation signal as much as possible, so that the terminal device can normally work and the coverage area is maintained as much as possible. In addition, because the excitation signal is a monophonic signal, sending the excitation signal at the higher first power causes less interference to transmission in the first communication network compared with sending the communication signal at the first power.

In another aspect, because the communication signal is a non-monophonic signal, sending the communication signal at a lower second power can reduce interference to transmission in the first communication network compared with sending the communication signal at the first power. Moreover, a receive threshold of the communication signal needs to be lower than the receive threshold of the excitation signal, the terminal device can normally work after receiving the excitation signal, and can normally receive the communication signal when the transmit power of the communication signal is properly reduced. Therefore, properly reducing the transmit power of the communication signal does not affect an overall coverage area.

In summary, the power control method provided in this application can ensure the coverage area as much as possible while reducing interference to transmission in the first communication network. When the coverage area is ensured, more first devices may not need to be deployed, so that deployment costs and complexity of interference coordination between first devices are reduced.

The foregoing describes the overall procedure for the power control method provided in this application. The following further describes the first power and the second power.

In a possible implementation, at least one of the first power and the second power may be a preset value. The preset value may be specified in a protocol, may be negotiated by the first device and the second device, or may be determined by the first device.

In another possible implementation, at least one of the first power and the second power may be determined based on an indication of the second device. In this possible implementation, as shown in FIG. 9, before step S701, the power control method provided in this application further includes the following steps.

S700a: The second device determines indication information.

The indication information is used to determine a signal transmit power of the first device, and the signal transmit power includes the at least one of the first power and the second power.

S700b: The second device sends the indication information to the first device. Correspondingly, the first device receives the indication information from the second device.

S700c: The first device determines the signal transmit power based on the indication information, that is, determines the at least one of the first power and the second power based on the indication information.

Optionally, the indication information may have the following four cases. Correspondingly, there may be different implementations of determining the signal transmit power by the first device based on the indication information.

Case 1: The indication information is first indication information, and the first indication information indicates the signal transmit power. In other words, the first indication information indicates the at least one of the first power and the second power.

Optionally, the case 1 may further include the following three cases:

Case (a): The first indication information indicates the first power, and does not indicate the second power. In this case, the second power may be a preset value. For the second power, refer to the foregoing related descriptions. Details are not described again.

Optionally, the first indication information may include a specific value of the first power. Alternatively, the second device may configure a first power value group for the first device in advance, or a first power value group may be specified in a protocol. In this case, the first indication information may include an index x, indicating that a value of the first power is an x^{th} value in the first power value group.

Case (b): The first indication information indicates the second power, and does not indicate the first power. In this case, the first power may be a preset value.

For a specific manner in which the first indication information indicates the second power, refer to related descriptions in the case (a). Details are not described herein again.

Case (c): The first indication information indicates the first power and the second power. For the indication manner, refer to related descriptions in the case (a). Details are not described herein again.

Case 2: The indication information is second indication information. The second indication information indicates a first parameter, the first parameter includes at least one of a first coexistence mode and a first coverage level, the first coexistence mode is a coexistence mode between the first device and the first communication network, the first coverage level is used to indicate a size of a coverage area of the first device, and the first parameter is used to determine the signal transmit power.

Optionally, the coexistence mode between the first device and the first communication network may include any one of the following: in-band deployment (In-band), guard-band deployment (Guard-band), or standalone deployment (Standalone).

When the coexistence mode is in-band deployment, a frequency domain resource used when the first device sends a signal to the terminal device is a resource in a transmission band of the first communication network, and the resource in the transmission band is used for transmission in the first communication network. In other words, the first device occupies the frequency domain resource, which is originally used for the first communication network, to perform transmission.

When the coexistence mode is guard-band deployment, a frequency domain resource used when the first device sends a signal to the terminal device is a resource in a guard band, the guard band may be adjacent to a transmission band, and transmission in the first communication network is performed in the transmission band.

20 megahertz (MHz) bandwidth resources are used as an example. If 1 MHz resources in a start part and 1 MHz resources in an end part of the 20 MHz resources are guard bands, and 18 MHz resources in a middle part of the 20 MHz resources are a transmission band of the first communication network, when the first device sends a signal to the terminal device by using some of the 18 MHz resources in the middle part, the coexistence mode is in-band deployment; or when the first device sends a signal to the terminal device by using some of the 1 MHz resources in the start part or end part, the coexistence mode is guard-band deployment.

When the coexistence mode is standalone deployment, in frequency domain, a frequency domain resource used when the first device sends a signal to the terminal device has a large interval with a frequency domain resource used for transmission in the first communication network, and quite small interference is caused by the signal sent by the first device to the terminal device to transmission in the first communication network.

Optionally, when the coverage level indicates the size of the coverage area of the first device, a higher coverage level indicates a larger coverage area of the first device, or a lower coverage level indicates a smaller coverage area of the first device. The size of the coverage area may be represented by a radius of the coverage area. For example, a coverage level 1 indicates that the radius of the coverage area of the first device is a radius 1, a coverage level 2 indicates that the radius of the coverage area of the first device is a radius 2, and a coverage level 3 indicates that the radius of the coverage area of the first device is a radius 3. Alternatively, the size of the coverage area may be a relative size. For example, a coverage level 1 indicates the smallest coverage area of the first device, a coverage level 2 indicates a smaller coverage area of the first device, and a coverage level 3 indicates the largest coverage area of the first device.

Optionally, in the case 2, that the first device determines the signal transmit power based on the indication information may include: The first device determines the signal transmit power based on the first parameter. In other words, the at least one of the first power and the second power is determined based on the first parameter.

Optionally, there may be a correspondence between a parameter in a first parameter set and a power. The first parameter set includes a plurality of values of coexistence modes and/or coverage levels, and includes the first parameter. The power includes a plurality of values of first powers and/or second powers. In this scenario, that the first device determines the signal transmit power based on the first parameter may include: The first device determines the signal transmit power based on the first parameter and a correspondence between a parameter in the first parameter set and a power.

Optionally, the correspondence between a parameter in the first parameter set and a power may be predefined in a protocol, or may be determined by the first device. Alternatively, the correspondence may be configured by the second device for the first device. In this case, the method provided in this application may further include: The second device sends first configuration information to the first device, where the first configuration information is used to configure the correspondence between a parameter in the first parameter set and a power. Correspondingly, the first device receives the first configuration information from the second device, and obtains the correspondence.

Optionally, that the first parameter includes the first coexistence mode and the parameter in the first parameter set includes coexistence modes is used as an example. The case 2 may further include the following three cases:

Case (a): The first parameter includes the first coexistence mode, and the signal transmit power includes the first power and the second power.

In other words, there is a correspondence between a coexistence mode, a first power, and a second power. The first parameter set may include a plurality of coexistence modes, each coexistence mode is corresponding to one value of a first power and one value of a second power, and the first coexistence mode is one of the plurality of coexistence modes. For example, the correspondence between a coexistence mode, a first power, and a second power may be described in the following Table 1. P1 represents the first power, and P2 represents the second power.

**Table 1**

| Coexistence mode | Value of P1 (unit: dBm) | Value of P2 (unit: dBm) |
|---|---|---|
| Mode 1 (for example, standalone) | X1 | Y1 |
| Mode 2 (for example, guard-band) | X2 | Y2 |
| Mode 3 (for example, in-band) | X3 | Y3 |

Optionally, in the case (a), that the first device determines the signal transmit power based on the first parameter and a correspondence between a parameter in the first parameter set and a power may include: querying the table based on the first coexistence mode included in the first parameter, to obtain values of the first power and the second power. For example, if the first coexistence mode included in the first parameter is the mode 3, the first device may query Table 1 to learn that the first power is X3 and the second power is Y3.

Optionally, in the case (a), the second indication information may include a mode name of the first coexistence mode. For example, the second indication information may include the "mode 3".

Alternatively, the second indication information may include an index of the first coexistence mode. For example, the second indication information may include an index 3, indicating that the index of the first coexistence mode is 3. If indexes of the mode 1, the mode 2, and the mode 3 are 1, 2, and 3, respectively, the second indication information indicates the mode 3.

Alternatively, the second indication information may include a bitmap (bitmap). The bitmap includes N bits, and each bit is corresponding to one coexistence mode. When a value of a bit is 1, it indicates that the first coexistence mode is a coexistence mode corresponding to the bit. For example, when the coexistence modes are listed in Table 1, the bitmap includes three bits respectively corresponding to the mode 1, the mode 2, and the mode 3. If the first coexistence mode is the mode 3, the bitmap included in the second indication information may be 001.

Case (b): The first parameter includes the first coexistence mode, and the signal transmit power includes the first power.

In other words, there is a correspondence between a coexistence mode and a first power. The first parameter set may include a plurality of coexistence modes, each coexistence mode is corresponding to one value of a first power, and the first coexistence mode is one of the plurality of coexistence modes. For example, the correspondence between a coexistence mode and a first power may be described in the following Table 2.

**Table 2**

| Coexistence mode | Value of P1 (unit: dBm) |
|---|---|
| Mode 1 (for example, standalone) | X1 |
| Mode 2 (for example, guard-band) | X2 |
| Mode 3 (for example, in-band) | X3 |

Optionally, in the case (b), that the first device determines the signal transmit power based on the first parameter and a correspondence between a parameter in the first parameter set and a power may include: querying the table based on the first coexistence mode included in the first parameter, to obtain a value of the first power. For example, if the first coexistence mode included in the first parameter is the mode 3, the first device may query Table 2 to learn that the first power is X3.

Optionally, in the case (b), the second power may be a preset value, or the second power may be indicated by the second device by using the first indication information. For the second power, refer to the foregoing related descriptions. Details are not described herein again.

For specific content included in the second indication information in the case (b), refer to related descriptions in the case (a). Details are not described herein again.

Case (c): The first parameter includes the first coexistence mode, and the signal transmit power includes the second power.

In other words, there is a correspondence between a coexistence mode and a second power. The first parameter set may include a plurality of coexistence modes, each coexistence mode is corresponding to one value of a second power, and the first coexistence mode is one of the plurality of coexistence modes. For example, the correspondence between a coexistence mode and a second power may be described in the following Table 3.

**Table 3**

| Coexistence mode | Value of P2 (unit: dBm) |
|---|---|
| Mode 1 (for example, standalone) | Y1 |
| Mode 2 (for example, guard-band) | Y2 |
| Mode 3 (for example, in-band) | Y3 |

Optionally, in the case (c), that the first device determines the signal transmit power based on the first parameter and a correspondence between a parameter in the first parameter set and a power may include: querying the table based on the first coexistence mode included in the first parameter, to obtain a value of the second power. For example, if the first coexistence mode included in the first parameter is the mode 3, the first device may query Table 3 to learn that the first power is Y3.

Optionally, in the case (c), the first power may be a preset value, or the first power may be indicated by the second device by using the first indication information. For the first power, refer to the foregoing related descriptions. Details are not described herein again.

For specific content included in the second indication information in the case (c), refer to related descriptions in the case (a). Details are not described herein again.

Optionally, that the first parameter includes the first coverage level and the parameter in the first parameter set includes coverage levels is used as an example. The case 2 may further include the following three cases:

Case (a): The first parameter includes the first coverage level, and the signal transmit power includes the first power and the second power.

In other words, there is a correspondence between a coverage level, a first power, and a second power. The first parameter set may include a plurality of coverage levels, each coverage level is corresponding to one value of a first power and one value of a second power, and the first coverage level is one of the plurality of coverage levels. For example, the correspondence between a coverage level, a first power, and a second power may be described in the following Table 4.

**Table 4**

| Coverage level | Value of P1 (unit: dBm) | Value of P2 (unit: dBm) |
|---|---|---|
| Level 1 | X1 | Y1 |
| Level 2 | X2 | Y2 |
| Level 3 | X3 | Y3 |

For other related implementations in the case (a), refer to related descriptions in the case (a) in which the first parameter includes the first coexistence mode. Details are not described herein again.

Case (b): The first parameter includes the first coverage level, and the signal transmit power includes the first power.

In other words, there is a correspondence between a coverage level and a first power. The first parameter set may include a plurality of coverage levels, each coverage level is corresponding to one value of a first power, and the first coverage level is one of the plurality of coverage levels. For example, the correspondence between a coverage level and a first power may be described in the following Table 5.

**Table 5**

| Coverage level | Value of P1 (unit: dBm) |
|---|---|
| Level 1 | X1 |
| Level 2 | X2 |
| Level 3 | X3 |

For other related implementations in the case (b), refer to related descriptions in the case (b) in which the first parameter includes the first coexistence mode. Details are not described herein again.

Case (c): The first parameter includes the first coverage level, and the signal transmit power includes the second power.

In other words, there is a correspondence between a coverage level and a second power. The first parameter set may include a plurality of coverage levels, each coverage level is corresponding to one value of a second power, and the first coverage level is one of the plurality of coverage levels. For example, the correspondence between a coverage level and a second power may be described in the following Table 6.

**Table 6**

| Coverage level | Value of P2 (unit: dBm) |
|---|---|
| Level 1 | Y1 |
| Level 2 | Y2 |
| Level 3 | Y3 |

For other related implementations in the case (c), refer to related descriptions in the case (c) in which the first parameter includes the first coexistence mode. Details are not described herein again.

Optionally, that the first parameter includes the first coexistence mode and the first coverage level and the parameter in the first parameter set includes coexistence modes and coverage levels is used as an example. The case 2 may further include the following three cases:

Case (a): The first parameter includes the first coexistence mode and the first coverage level, and the signal transmit power includes the first power and the second power.

In other words, the first parameter set may include a plurality of coexistence modes and a plurality of coverage levels, and each coexistence mode or coverage level is corresponding to a group of values of first powers and a group of values of second powers, or a combination of a coexistence mode and a coverage level is corresponding to one value of a first power and one value of a second power. The first coexistence mode is one of the plurality of coexistence modes, and the first coverage level is one of the plurality of coverage levels. For example, a correspondence between a coexistence mode, a coverage level, a first power, and a second power may be described in the following Table 7 or Table 8.

**Table 7**

| Coexistence mode | Coverage level | Value of P1 (unit: dBm) | Value of P2 (unit: dBm) |
|---|---|---|---|
| Mode 1 (for example, standalone) | Level 1 | X11 | Y11 |
| | Level 2 | X12 | Y12 |
| | Level 3 | X13 | Y13 |
| Mode 2 (for example, guard-band) | Level 1 | X21 | Y21 |
| | Level 2 | X22 | Y22 |
| | Level 3 | X23 | Y23 |
| Mode 3 (for example, in-band) | Level 1 | X31 | Y31 |
| | Level 2 | X32 | Y32 |
| | Level 3 | X33 | Y33 |

**Table 8**

| Coverage level | Coexistence mode | Value of P1 (unit: dBm) | Value of P2 (unit: dBm) |
|---|---|---|---|
| Level 1 | Mode 1 (for example, standalone) | X11 | Y11 |
| | Mode 2 (for example, guard-band) | X12 | Y12 |
| | Mode 3 (for example, in-band) | X13 | Y13 |
| Level 2 | Mode 1 (for example, standalone) | X21 | Y21 |
| | Mode 2 (for example, guard-band) | X22 | Y22 |
| | Mode 3 (for example, in-band) | X23 | Y23 |
| Level 3 | Mode 1 (for example, standalone) | X31 | Y31 |
| | Mode 2 (for example, guard-band) | X32 | Y32 |
| | Mode 3 (for example, in-band) | X33 | Y33 |

Optionally, in the case (a), the second indication information may jointly indicate the coexistence mode and the coverage level. For example, the second indication information may include a plurality of bits, and a value of the plurality of bits is corresponding to a combination of a coexistence mode and a coverage level. After receiving the second indication information, the first device may determine the coexistence mode and the coverage level based on the value of the plurality of bits. For example, coverage levels and coexistence modes are listed in Table 7 or Table 8, and each combination of a coexistence mode and a coverage level corresponding to a value of a plurality of bits may be listed in Table 9.

**Table 9**

| Bits | Coexistence mode | Coverage level |
|---|---|---|
| 0000 | Mode 1 (for example, standalone) | Level 1 |
| 0001 | Mode 1 (for example, standalone) | Level 2 |
| 0010 | Mode 1 (for example, standalone) | Level 3 |
| 0011 | Mode 2 (for example, guard-band) | Level 1 |
| 0100 | Mode 2 (for example, guard-band) | Level 2 |
| 0101 | Mode 2 (for example, guard-band) | Level 3 |
| 0110 | Mode 3 (for example, in-band) | Level 1 |
| 0111 | Mode 3 (for example, in-band) | Level 2 |
| 1000 | Mode 3 (for example, in-band) | Level 3 |

Alternatively, the second indication information may independently indicate the coexistence mode and the coverage level. For example, the second indication information includes a first part of bits used to indicate the coexistence mode, and includes a second part of bits used to indicate the coverage level. For example, the second indication information may include four bits, different values of former two bits are used to indicate different coexistence modes, and different values of latter two bits are used to indicate different coverage levels.

Case (b): The first parameter includes the first coexistence mode and the first coverage level, and the signal transmit power includes the first power.

In other words, the first parameter set may include a plurality of coexistence modes and a plurality of coverage levels, and each coexistence mode or coverage level is corresponding to a group of values of first powers, or a combination of a coexistence mode and a coverage level is corresponding to one value of a first power. The first coexistence mode is one of the plurality of coexistence modes, and the first coverage level is one of the plurality of coverage levels. For example, a correspondence between a coexistence mode, a coverage level, and a first power may be described in the following Table 10.

**Table 10**

| Coexistence mode | Coverage level | Value of P1 (unit: dBm) |
|---|---|---|
| Mode 1 (for example, standalone) | Level 1 | Y11 |
| | Level 2 | Y12 |
| | Level 3 | Y13 |
| Mode 2 (for example, guard-band) | Level 1 | Y21 |
| | Level 2 | Y22 |
| | Level 3 | Y23 |
| Mode 3 (for example, in-band) | Level 1 | Y31 |
| | Level 2 | Y32 |
| | Level 3 | Y33 |

Optionally, in the case (b), the second power may be a preset value, or the second power may be indicated by the second device by using the first indication information. For the second power, refer to the foregoing related descriptions. Details are not described again.

For other related implementations in the case (b), refer to related descriptions in the case (a) in which the first parameter includes the first coexistence mode and the first coverage level. Details are not described herein again.

Case (c): The first parameter includes the first coexistence mode and the first coverage level, and the signal transmit power includes the second power.

In other words, the first parameter set may include a plurality of coexistence modes and a plurality of coverage levels, and each coexistence mode or coverage level is corresponding to a group of values of second powers, or a combination of a coexistence mode and a coverage level is corresponding to one value of a second power. The first coexistence mode is one of the plurality of coexistence modes, and the first coverage level is one of the plurality of coverage levels. For example, a correspondence between a coexistence mode, a coverage level, and a second power may be described in the following Table 11.

**Table 11**

| Coexistence mode | Coverage level | Value of P2 (unit: dBm) |
|---|---|---|
| Mode 1 (for example, standalone) | Level 1 | Y11 |
| | Level 2 | Y12 |
| | Level 3 | Y13 |
| Mode 2 (for example, guard-band) | Level 1 | Y21 |
| | Level 2 | Y22 |
| | Level 3 | Y23 |
| Mode 3 (for example, in-band) | Level 1 | Y31 |
| | Level 2 | Y32 |
| | Level 3 | Y33 |

Optionally, in the case (c), the first power may be a preset value, or the first power may be indicated by the second device by using the first indication information. For the first power, refer to the foregoing related descriptions. Details are not described again.

For other related implementations in the case (c), refer to related descriptions in the case (a) in which the first parameter includes the first coexistence mode and the first coverage level. Details are not described herein again.

Case 3: The indication information is third indication information.

In a possible implementation, the third indication information indicates at least one of the first power and a difference between the first power and the second power. For ease of description, in the following embodiments of this application, the difference between the first power and the second power is referred to as a "difference" for short, and is denoted by ΔP.

Optionally, when the difference is a difference obtained by subtracting the second power from the first power, a value of the difference is not less than 0. When the value of the difference is greater than 0, the first power is greater than the second power. When the value of the difference is equal to 0, the first power is equal to the second power. Alternatively, when the difference is a difference obtained by subtracting the first power from the second power, a value of the difference is not greater than 0. When the value of the difference is less than 0, the first power is greater than the second power. When the value of the difference is equal to 0, the first power is equal to the second power.

Optionally, the difference is a difference (unit: dB) between the first power and the second power when units of the first power and the second power are dBm. If the units of the first power and the second power are watts (W), the difference may be converted into a ratio of the first power to the second power.

Optionally, in this possible implementation, the third indication information may further include the following three cases:
Case (a): The third indication information indicates the first power, and does not indicate the difference. In this case, the difference may be a preset value. For related implementations of the third indication information, refer to related descriptions in the case (a) in the case 1.
Case (b): The third indication information indicates the difference, and does not indicate the first power. In this case, the first power may be a preset value.

For a specific manner in which the first indication information indicates the difference, refer to related descriptions in the case (a) in the case 1. Details are not described herein again.

Case (c): The third indication information indicates the first power and the difference.

Optionally, in this possible implementation, that the first device determines the signal transmit power based on the indication information may include: determining the second power based on the first power and the difference. For example, when the difference is not less than 0, P2=P1-ΔP; or when the difference is not greater than 0, P2=P1+ΔP.

In another possible implementation, the third indication information indicates at least one of the second power and a difference between the first power and the second power. In this case, for related implementations of the third indication information, refer to related descriptions in which the third indication information indicates the at least one of the first power and the difference. The first power can be replaced with the second power for understanding.

Optionally, in this possible implementation, that the first device determines the signal transmit power based on the indication information may include: determining the first power based on the second power and the difference. For example, when the difference is not less than 0, P1=P2+ΔP; or when the difference is not greater than 0, P 1=P2-ΔP.

Case 4: The indication information is fourth indication information. The fourth indication information indicates a second parameter, the second parameter includes at least one of a second coexistence mode and a second coverage level, the second coexistence mode is a coexistence mode between the first device and the first communication network, and the second coverage level is used to indicate a size of a coverage area of the first device. For the coexistence mode and the coverage level, refer to related descriptions in the case 2. Details are not described herein again.

Optionally, the second coexistence mode may be the same as or different from the first coexistence mode, and the second coverage level may be the same as or different from the first coverage level. This is not limited.

Optionally, the second parameter is used to determine a third parameter or a fourth parameter, the third parameter includes at least one of the first power and a difference between the first power and the second power, and the fourth parameter includes at least one of the second power and a difference between the first power and the second power.

In other words, in the case 4, that the first device determines the signal transmit power based on the indication information may include: determining the third parameter based on the second parameter, and determining the second power based on the first power and the difference; or may include: determining the fourth parameter based on the second parameter, and determining the first power based on the second power and the difference.

In a possible implementation, there may be a correspondence between a parameter in a second parameter set and a parameter in a third parameter set. The second parameter set includes a plurality of values of coexistence modes and/or coverage levels, and includes the second parameter. The third parameter set includes a plurality of values of first powers and/or differences, and includes the third parameter. In this scenario, that the first device determines the third parameter based on the second parameter may include: The first device determines the third parameter based on the second parameter and the correspondence between a parameter in the second parameter set and a parameter in the third parameter set.

Optionally, the correspondence between a parameter in the second parameter set and a parameter in the third parameter set may be predefined in a protocol, or may be determined by the first device. Alternatively, the correspondence may be configured by the second device for the first device. In this case, the method provided in this application may further include: The second device sends second configuration information to the first device, where the second configuration information is used to configure the correspondence between a parameter in the second parameter set and a parameter in the third parameter set. Correspondingly, the first device receives the second configuration information from the second device, and obtains the correspondence.

Optionally, that the second parameter includes the second coexistence mode and the parameter in the second parameter set includes coexistence modes is used as an example. The case 4 may further include the following three cases:

Case (a): The second parameter includes the second coexistence mode, and the third parameter includes the first power and the difference.

In other words, there is a correspondence between a coexistence mode, a first power, and a difference. The second parameter set may include a plurality of coexistence modes, each coexistence mode is corresponding to one value of a first power and one value of a difference, and the second coexistence mode is one of the plurality of coexistence modes. For example, the correspondence between a coexistence mode, a first power, and a difference may be described in the following Table 12.

**Table 12**

| Coexistence mode | Value of P1 (unit: dBm) | Value of ΔP (unit: dB) |
|---|---|---|
| Mode 1 (for example, standalone) | X1 | Z1 |
| Mode 2 (for example, guard-band) | X2 | Z2 |
| Mode 3 (for example, in-band) | X3 | Z3 |

Optionally, in the case (a), that the first device determines the third parameter based on the second parameter and the correspondence between a parameter in the second parameter set and a parameter in the third parameter set may include: querying the table based on the second coexistence mode included in the second parameter, to obtain values of the first power and the difference. For example, if the second coexistence mode included in the second parameter is the mode 2, the first device may query Table 12 to learn that the first power is X2 and the difference is Z2, and then determine P2=X2+Z2 or P2=X2-Z2.

For a specific implementation of the fourth indication information, refer to related descriptions of the second indication information in the case (a) in which the first parameter includes the first coexistence mode in the case 2. Details are not described herein again.

Case (b): The second parameter includes the second coexistence mode, and the third parameter includes the difference.

In other words, there is a correspondence between a coexistence mode and a difference. The second parameter set may include a plurality of coexistence modes, each coexistence mode is corresponding to one value of a difference, and the second coexistence mode is one of the plurality of coexistence modes. For example, the correspondence between a coexistence mode and a difference may be described in the following Table 13.

**Table 13**

| Coexistence mode | Value of ΔP (unit: dB) |
|---|---|
| Mode 1 (for example, standalone) | Z1 |
| Mode 2 (for example, guard-band) | Z2 |
| Mode 3 (for example, in-band) | Z3 |

Optionally, in the case (b), the first power may be a preset value, or the first power may be indicated by the second device by using the third indication information or the first indication information. For the first power, refer to the foregoing related descriptions. Details are not described herein again.

Case (c): The second parameter includes the second coexistence mode, and the third parameter includes the first power. For details, refer to related descriptions in the case (b) in which the first parameter includes the first coexistence mode in the case 2. Details are not described herein again.

Optionally, in the case (c), the difference may be a preset value, or the difference may be indicated by the second device by using the third indication information. For the difference, refer to the foregoing related descriptions. Details are not described herein again.

Optionally, that the second parameter includes the second coverage level and the parameter in the second parameter set includes coverage levels is used as an example. The case 4 may further include the following three cases:
Case (a): The second parameter includes the second coverage level, and the third parameter includes the first power and the difference.

In other words, there is a correspondence between a coverage level, a first power, and a difference. The second parameter set may include a plurality of coverage levels, each coverage level is corresponding to one value of a first power and one value of a difference, and the second coverage level is one of the plurality of coverage levels. For example, the correspondence between a coverage level, a first power, and a difference may be described in the following Table 14.

**Table 14**

| Coverage level | Value of P1 (unit: dBm) | Value of ΔP (unit: dB) |
|---|---|---|
| Level 1 | X1 | Z1 |
| Level 2 | X2 | Z2 |
| Level 3 | X3 | Z3 |

For other related implementations in the case (a), refer to related descriptions in the case (a) in which the second parameter includes the second coexistence mode. Details are not described herein again.

Case (b): The second parameter includes the second coverage level, and the third parameter includes the difference.

In other words, there is a correspondence between a coverage level and a difference. The second parameter set may include a plurality of coverage levels, each coverage level is corresponding to one value of a difference, and the second coverage level is one of the plurality of coverage levels. For example, the correspondence between a coverage level and a difference may be described in the following Table 15.

**Table 15**

| Coverage level | Value of ΔP (unit: dB) |
|---|---|
| Level 1 | Z1 |
| Level 2 | Z2 |
| Level 3 | Z3 |

For other related implementations in the case (b), refer to related descriptions in the case (b) in which the second parameter includes the second coexistence mode. Details are not described herein again.

Case (c): The second parameter includes the second coverage level, and the third parameter includes the first power. For details, refer to related descriptions in the case (b) in which the first parameter includes the first coverage level in the case 2. Details are not described herein again.

Optionally, in the case (c), the difference may be a preset value, or the difference may be indicated by the second device by using the third indication information. For the difference, refer to the foregoing related descriptions. Details are not described herein again.

Optionally, that the second parameter includes the second coexistence mode and the second coverage level and the parameter in the second parameter set includes coexistence modes and coverage levels is used as an example. The case 4 may further include the following three cases:

Case (a): The second parameter includes the second coexistence mode and the second coverage level, and the third parameter includes the first power and the difference.

In other words, the second parameter set may include a plurality of coexistence modes and a plurality of coverage levels, and each coexistence mode or coverage level is corresponding to a group of values of first powers and a group of differences, or a combination of a coexistence mode and a coverage level is corresponding to one value of a first power and one value of a difference. The second coexistence mode is one of the plurality of coexistence modes, and the second coverage level is one of the plurality of coverage levels. For example, a correspondence between a coexistence mode, a coverage level, a first power, and a difference may be described in the following Table 16 or Table 17.

**Table 16**

| Coexistence mode | Coverage level | Value of P1 (unit: dBm) | Value of ΔP (unit: dB) |
|---|---|---|---|
| Mode 1 (for example, standalone) | Level 1 | X11 | Z11 |
| | Level 2 | X12 | Z12 |
| | Level 3 | X13 | Z13 |
| Mode 2 (for example, guard-band) | Level 1 | X21 | Z21 |
| | Level 2 | X22 | Z22 |
| | Level 3 | X23 | Z23 |
| Mode 3 (for example, in-band) | Level 1 | X31 | Z31 |
| | Level 2 | X32 | Z32 |
| | Level 3 | X33 | Z33 |

**Table 17**

| Coverage level | Coexistence mode | Value of P1 (unit: dBm) | Value of ΔP (unit: dB) |
|---|---|---|---|
| Level 1 | Mode 1 (for example, standalone) | X11 | Z11 |
| | Mode 2 (for example, guard-band) | X12 | Z12 |
| | Mode 3 (for example, in-band) | X13 | Z13 |
| Level 2 | Mode 1 (for example, standalone) | X21 | Z21 |
| | Mode 2 (for example, guard-band) | X22 | Z22 |
| | Mode 3 (for example, in-band) | X23 | Z23 |
| Level 3 | Mode 1 (for example, standalone) | X31 | Z31 |
| | Mode 2 (for example, guard-band) | X32 | Z32 |
| | Mode 3 (for example, in-band) | X33 | Z33 |

For other related implementations in the case (a), refer to related descriptions in the case (a) in which the first parameter includes the first coexistence mode and the first coverage level. Details are not described herein again.

Case (b): The second parameter includes the second coexistence mode and the second coverage level, and the third parameter includes the first power. For details, refer to related descriptions in the case (b) in which the first parameter includes the first coexistence mode and the first coverage level. Details are not described herein again.

Optionally, in the case (b), the difference may be a preset value, or the difference may be indicated by the second device by using the third indication information. For the difference, refer to the foregoing related descriptions. Details are not described herein again.

Case (c): The second parameter includes the second coexistence mode and the second coverage level, and the third parameter includes the difference.

In other words, the second parameter set may include a plurality of coexistence modes and a plurality of coverage levels, and each coexistence mode or coverage level is corresponding to a group of values of differences, or a combination of a coexistence mode and a coverage level is corresponding to one value of a difference. The second coexistence mode is one of the plurality of coexistence modes, and the second coverage level is one of the plurality of coverage levels. For example, a correspondence between a coexistence mode, a coverage level, and a difference may be described in the following Table 18.

**Table 18**

| Coexistence mode | Coverage level | Value of ΔP (unit: dB) |
|---|---|---|
| Mode 1 (for example, standalone) | Level 1 | Z11 |
| | Level 2 | Z12 |
| | Level 3 | Z13 |
| Mode 2 (for example, guard-band) | Level 1 | Z21 |
| | Level 2 | Z22 |
| | Level 3 | Z23 |
| Mode 3 (for example, in-band) | Level 1 | Z31 |
| | Level 2 | Z32 |
| | Level 3 | Z33 |

Optionally, in the case (c), the first power may be a preset value, or the first power may be indicated by the second device by using the first indication information or the third indication information. For the first power, refer to the foregoing related descriptions. Details are not described herein again.

In another possible implementation, there may be a correspondence between a parameter in a second parameter set and a parameter in a fourth parameter set. The second parameter set includes a plurality of values of coexistence modes and/or coverage levels, and includes the second parameter. The fourth parameter set includes a plurality of values of second powers and/or differences, and includes the fourth parameter. In this scenario, that the first device determines the fourth parameter based on the second parameter may include: The first device determines the fourth parameter based on the second parameter and the correspondence between a parameter in the second parameter set and a parameter in the fourth parameter set.

Optionally, the correspondence between a parameter in the second parameter set and a parameter in the fourth parameter set may be predefined in a protocol, or may be determined by the first device. Alternatively, the correspondence may be configured by the second device for the first device. In this case, the method provided in this application may further include: The second device sends second configuration information to the first device, where the second configuration information is used to configure the correspondence between a parameter in the second parameter set and a parameter in the fourth parameter set. Correspondingly, the first device receives the second configuration information from the second device, and obtains the correspondence.

Optionally, for a specific implementation in which there is a correspondence between a parameter in the second parameter set and a parameter in the fourth parameter set, refer to related descriptions in which there is a correspondence between a parameter in the second parameter set and a parameter in the third parameter set. The first power can be replaced with the second power for understanding. Details are not described herein again.

According to the foregoing solution, the first device can determine the at least one of the first power and the second power based on an indication of the second device, and the second device controls a sending behavior of the first device, so that the second device can adjust the transmit power of the first device depending on an actual situation. In addition, different transmit powers may be used in different coexistence modes or at different coverage levels, and a transmission rate can be increased at a power as high as possible while reducing interference to the first communication network.

It can be understood that in the foregoing embodiments, the methods and/or steps implemented by the first device may be alternatively implemented by a component (for example, a processor, a chip, a chip system, a circuit, a logical module, or software) that may be used in the first device, and the methods and/or steps implemented by the second device may be alternatively implemented by a component (for example, a processor, a chip, a chip system, a circuit, a logical module, or software) that may be used in the second device.

The foregoing mainly describes the solutions provided in this application. Correspondingly, this application further provides a communication apparatus. The communication apparatus is configured to implement the methods in the foregoing method embodiments. The communication apparatus may be the first device in the method embodiments, an apparatus including the first device, or a component that may be used in the first device, for example, a chip or a chip system. Alternatively, the communication apparatus may be the second device in the method embodiments, an apparatus including the second device, or a component that may be used in the second device, for example, a chip or a chip system.

It can be understood that, to implement the foregoing functions, the communication apparatus includes a corresponding hardware structure and/or software module for performing the functions. A person skill in the art should be easily aware that, in combination with the units and algorithm steps in the examples described in embodiments disclosed in this specification, this application can be implemented in a form of hardware or a combination of hardware and computer software. Whether a function is performed by hardware or by computer software driving hardware depends on particular applications and design constraints of the technical solutions. A person skilled in the art may use a different method to implement the described functions for each particular application, but it should not be considered that the implementation goes beyond the scope of this application.

In embodiments of this application, functional modules of the communication apparatus may be obtained through division based on the foregoing method embodiments. For example, each functional module may be obtained through division in correspondence to each function, or at least two functions may be integrated into one processing module. The integrated module may be implemented in a form of hardware, or may be implemented in a form of a software functional module. It should be noted that division into modules in embodiments of this application is an example, is merely logical function division, and may be other division during actual implementation.

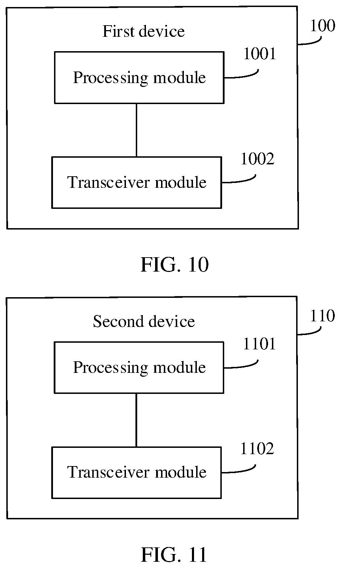

For example, the communication apparatus is the first device in the foregoing method embodiments. FIG. 10 is a schematic diagram of a structure of a first device 100. The first device 100 includes a processing module 1001 and a transceiver module 1002.

In some embodiments, the first device 100 may further include a storage module (not shown in FIG. 10), configured to store program instructions and data.

In some embodiments, the transceiver module 1002 may also be referred to as a transceiver unit, and is configured to implement a sending function and/or a receiving function. The transceiver module 1002 may include a transceiver circuit, a transceiver machine, a transceiver, or a communication interface.

In some embodiments, the transceiver module 1002 may include a receiving module and a sending module, respectively configured to perform receiving steps and sending steps performed by the first device in the foregoing method embodiments, and/or configured to support other processes of the technologies described in this specification. The processing module 1001 may be configured to perform processing (for example, determining) steps performed by the first device in the foregoing method embodiments, and/or configured to support other processes of the technologies described in this specification.

In some implementation scenarios:
the transceiver module 1002 is configured to send an excitation signal to a terminal device at a first power; and the transceiver module 1002 is further configured to send a communication signal to the terminal device at a second power, where the communication signal is used to bear information, and the second power is less than the first power.

Optionally, the transceiver module 1002 is further configured to receive first indication information from a second device, where the first indication information indicates at least one of the first power and the second power.

Optionally, the transceiver module 1002 is further configured to receive second indication information from a second device, where the second indication information indicates a first parameter, the first parameter includes at least one of a first coexistence mode and a first coverage level, the first coexistence mode is a coexistence mode between the first device and a first communication network, and the first coverage level is used to indicate a size of a coverage area of the first device; and the processing module 1001 is configured to determine at least one of the first power and the second power based on the first parameter.

Optionally, the transceiver module 1002 is further configured to receive first configuration information from the second device, where the first configuration information is used to configure a correspondence between a parameter in a first parameter set and a power, and the first parameter set includes the first parameter. That the processing module 1001 is configured to determine at least one of the first power and the second power based on the first parameter includes: The processing module 1001 is configured to determine the at least one of the first power and the second power based on the first parameter and the correspondence between a parameter in the first parameter set and a power.

Optionally, the transceiver module 1002 is further configured to receive third indication information from a second device, where the third indication information indicates at least one of the first power and a difference between the first power and the second power, and the processing module 1001 is configured to determine the second power based on the first power and the difference; or the third indication information indicates at least one of the second power and a difference between the first power and the second power, and the processing module 1001 is configured to determine the first power based on the second power and the difference.

Optionally, the transceiver module 1002 is further configured to receive fourth indication information from a second device, where the fourth indication information indicates a second parameter, the second parameter includes at least one of a second coexistence mode and a second coverage level, the second coexistence mode is a coexistence mode between the first device and a first communication network, and the second coverage level is used to indicate a size of a coverage area of the first device; and
the processing module 1001 is further configured to: determine a third parameter based on the second parameter, where the third parameter includes at least one of the first power and a difference between the first power and the second power, and determine the second power based on the first power and the difference; or
the processing module 1001 is configured to: determine a fourth parameter based on the second parameter, where the fourth parameter includes at least one of the second power and a difference between the first power and the second power, and determine the first power based on the second power and the difference.

Optionally, the transceiver module 1002 is further configured to receive second configuration information from the second device, where the second configuration information is used to configure a correspondence between a parameter in a second parameter set and a parameter in a third parameter set, the second parameter set includes the second parameter, and the third parameter set includes the third parameter. That the processing module 1001 is configured to: determine a third parameter based on the second parameter includes: The processing module 1001 is configured to determine the third parameter based on the second parameter and the correspondence between a parameter in the second parameter set and a parameter in the third parameter set.

Alternatively, the second configuration information is used to configure a correspondence between a parameter in a second parameter set and a parameter in a fourth parameter set, the second parameter set includes the second parameter, and the fourth parameter set includes the fourth parameter. That the processing module 1001 is configured to: determine a fourth parameter based on the second parameter includes: The processing module 1001 is configured to determine the fourth parameter based on the second parameter and the correspondence between a parameter in the second parameter set and a parameter in the fourth parameter set.

Optionally, that the transceiver module 1002 is configured to send an excitation signal to a terminal device at a first power includes: The transceiver module 1002 is configured to send the excitation signal to the terminal device on a first frequency domain resource at the first power. That the transceiver module 1002 is further configured to send a communication signal to the terminal device at a second power includes: The transceiver module 1002 is further configured to send the communication signal to the terminal device on a second frequency domain resource at the second power. Bandwidths of the first frequency domain resource and the second frequency domain resource are integer multiples of a bandwidth of a frequency domain resource unit of the first communication network.

In some other implementation scenarios:
the transceiver module 1002 is configured to receive indication information from a second device, and the processing module 1001 is configured to determine a signal transmit power based on the indication information, where the signal transmit power includes at least one of a first power and a second power, and the second power is not greater than the first power; and the transceiver module 1002 is further configured to: send an excitation signal to a terminal device at a first power, and send a communication signal to the terminal device at a second power, where the communication signal is used to bear information.

Optionally, the indication information is first indication information, and the first indication information indicates the signal transmit power.

Optionally, the indication information is second indication information, the second indication information indicates a first parameter, the first parameter includes at least one of a first coexistence mode and a first coverage level, the first coexistence mode is a coexistence mode between the first device and a first communication network, and the first coverage level is used to indicate a size of a coverage area of the first device. That the processing module 1001 is configured to determine a signal transmit power based on the indication information includes: The processing module 1001 is configured to determine the signal transmit power based on the first parameter.

Optionally, the transceiver module 1002 is configured to receive first configuration information from the second device, where the first configuration information is used to configure a correspondence between a parameter in a first parameter set and a power, and the first parameter set includes the first parameter. That the processing module 1001 is configured to determine the signal transmit power based on the first parameter includes: The processing module 1001 is configured to determine the signal transmit power based on the first parameter and the correspondence between a parameter in the first parameter set and a power.

Optionally, the indication information is third indication information, and the third indication information indicates at least one of the first power and a difference between the first power and the second power. That the processing module 1001 is configured to determine a signal transmit power based on the indication information includes: The processing module 1001 is configured to determine the second power based on the first power and the difference. Alternatively, the third indication information indicates at least one of the second power and a difference between the first power and the second power. That the processing module 1001 is configured to determine a signal transmit power based on the indication information includes: The processing module 1001 is configured to determine the first power based on the second power and the difference.

Optionally, the indication information is fourth indication information, the fourth indication information indicates a second parameter, the second parameter includes at least one of a second coexistence mode and a second coverage level, the second coexistence mode is a coexistence mode between the first device and a first communication network, and the second coverage level is used to indicate a size of a coverage area of the first device. That the processing module 1001 is configured to determine a signal transmit power based on the indication information includes: The processing module 1001 is configured to: determine a third parameter based on the second parameter, where the third parameter includes at least one of the first power and a difference between the first power and the second power, and determine the second power based on the first power and the difference; or the processing module 1001 is configured to: determine a fourth parameter based on the second parameter, where the fourth parameter includes at least one of the second power and a difference between the first power and the second power, and determine the first power based on the second power and the difference.

Optionally, the transceiver module 1002 is further configured to receive second configuration information from the second device, where the second configuration information is used to configure a correspondence between a parameter in a second parameter set and a parameter in a third parameter set, the second parameter set includes the second parameter, and the third parameter set includes the third parameter. That the processing module 1001 is configured to: determine a third parameter based on the second parameter includes: The processing module 1001 is configured to determine the third parameter based on the second parameter and the correspondence between a parameter in the second parameter set and a parameter in the third parameter set.

Alternatively, the second configuration information is used to configure a correspondence between a parameter in a second parameter set and a parameter in a fourth parameter set, the second parameter set includes the second parameter, and the fourth parameter set includes the fourth parameter. That the processing module 1001 is configured to: determine a fourth parameter based on the second parameter includes: The processing module 1001 is configured to determine the fourth parameter based on the second parameter and the correspondence between a parameter in the second parameter set and a parameter in the fourth parameter set.

Optionally, that the transceiver module 1002 is configured to send an excitation signal to a terminal device at a first power includes: The transceiver module 1002 is configured to send the excitation signal to the terminal device on a first frequency domain resource at the first power. That the transceiver module 1002 is configured to send a communication signal to the terminal device at a second power includes: The transceiver module 1002 is configured to send the communication signal to the terminal device on a second frequency domain resource at the second power. Bandwidths of the first frequency domain resource and the second frequency domain resource are integer multiples of a bandwidth of a frequency domain resource unit of the first communication network.

All related content of the steps in the foregoing method embodiments may be cited in function descriptions of a corresponding functional module. Details are not described herein again.

In this application, the first device 100 is presented with the functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art can figure out that the first device 100 may use a form of the communication apparatus 600 shown in FIG. 6.

In an example, functions/implementation processes of the processing module 1001 in FIG. 10 may be implemented by the processor 601 in the communication apparatus 600 shown in FIG. 6 by invoking the computer-executable instructions stored in the memory 603. Functions/implementation processes of the transceiver module 1002 in FIG. 10 may be implemented by the communication interface 604 in the communication apparatus 600 shown in FIG. 6.

In some embodiments, when the first device 100 in FIG. 10 is a chip or a chip system, the functions/implementation processes of the transceiver module 1002 may be implemented by an input/output interface (or a communication interface) of the chip or the chip system, and the functions/implementation processes of the processing module 1001 may be implemented by a processor (or a processing circuit) of the chip or the chip system.

The first device 100 provided in this embodiment may perform the methods. Therefore, for technical effects that can be achieved by the first device 100, refer to the foregoing method embodiments. Details are not described herein again.

For example, the communication apparatus is the second device in the foregoing method embodiments. FIG. 11 is a schematic diagram of a structure of a second device 110. The second device 110 includes a processing module 1101 and a transceiver module 1102.

In some embodiments, the second device 110 may further include a storage module (not shown in FIG. 11), configured to store program instructions and data.

In some embodiments, the transceiver module 1102 may also be referred to as a transceiver unit, and is configured to implement a sending function and/or a receiving function. The transceiver module 1102 may include a transceiver circuit, a transceiver machine, a transceiver, or a communication interface.

In some embodiments, the transceiver module 1102 may include a receiving module and a sending module, respectively configured to perform receiving steps and sending steps performed by the second device in the foregoing method embodiments, and/or configured to support other processes of the technologies described in this specification. The processing module 1101 may be configured to perform processing (for example, determining) steps performed by the second device in the foregoing method embodiments, and/or configured to support other processes of the technologies described in this specification. An example is used as follows:

The processing module 1101 is configured to determine indication information. The transceiver module 1102 is configured to send the indication information to a first device. The indication information is used to determine a signal transmit power of the first device, the signal transmit power includes at least one of a first power and a second power, the first power is a power of an excitation signal, the second power is a power of a communication signal, the communication signal is used to bear information, and the second power is not greater than the first power.

Optionally, that the second power is not greater than the first power includes: the second power is less than the first power.

Optionally, the indication information is first indication information, and the first indication information indicates the signal transmit power.

Optionally, the indication information is second indication information, the second indication information indicates a first parameter, the first parameter includes at least one of a first coexistence mode and a first coverage level, the first coexistence mode is a coexistence mode between the first device and a first communication network, the first coverage level is used to indicate a size of a coverage area of the first device, and the first parameter is used to determine the signal transmit power.

Optionally, the transceiver module 1102 is further configured to send first configuration information to the first device, where the first configuration information is used to configure a correspondence between a parameter in a first parameter set and a power, and the first parameter set includes the first parameter.

Optionally, the indication information is third indication information, and the third indication information indicates the first power and a difference between the first power and the second power; or the third indication information indicates the second power and a difference between the first power and the second power.

Optionally, the indication information is fourth indication information, the fourth indication information indicates a second parameter, the second parameter includes at least one of a second coexistence mode and a second coverage level, the second coexistence mode is a coexistence mode between the first device and a first communication network, the second coverage level is used to indicate a size of a coverage area of the first device, the second parameter is used to determine a third parameter or a fourth parameter, the third parameter includes at least one of the first power and a difference between the first power and the second power, and the fourth parameter includes at least one of the second power and a difference between the first power and the second power.

Optionally, the transceiver module 1102 is further configured to send second configuration information to the first device, where the second configuration information is used to configure a correspondence between a parameter in a second parameter set and a parameter in a third parameter set, the second parameter set includes the second parameter, and the third parameter set includes the third parameter; or the second configuration information is used to configure a correspondence between a parameter in a second parameter set and a parameter in a fourth parameter set, the second parameter set includes the second parameter, and the fourth parameter set includes the fourth parameter.

All related content of the steps in the foregoing method embodiments may be cited in function descriptions of a corresponding functional module. Details are not described herein again.

In this application, the second device 110 is presented with the functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art can figure out that the second device 110 may use a form of the communication apparatus 600 shown in FIG. 6.

In an example, functions/implementation processes of the processing module 1101 in FIG. 11 may be implemented by the processor 601 in the communication apparatus 600 shown in FIG. 6 by invoking the computer-executable instructions stored in the memory 603. Functions/implementation processes of the transceiver module 1102 in FIG. 11 may be implemented by the communication interface 604 in the communication apparatus 600 shown in FIG. 6.

In some embodiments, when the second device 110 in FIG. 11 is a chip or a chip system, the functions/implementation processes of the transceiver module 1102 may be implemented by an input/output interface (or a communication interface) of the chip or the chip system, and the functions/implementation processes of the processing module 1101 may be implemented by a processor (or a processing circuit) of the chip or the chip system.

The second device 110 provided in this embodiment may perform the methods. Therefore, for technical effects that can be achieved by the second device 110, refer to the foregoing method embodiments. Details are not described herein again.

In some embodiments, the first device or the second device in this application may be alternatively implemented by using the following: one or more field programmable gate arrays (field programmable gate arrays, FPGAs), a programmable logic device (programmable logic device, PLD), a controller, a state machine, a logic gate, a discrete hardware component, any other proper circuit, or any combination of circuits that can perform various functions described in this application.

In some embodiments, this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the memory may alternatively not be in the communication apparatus.

In another possible implementation, the communication apparatus further includes an interface circuit. The interface circuit is a code/data read-write interface circuit, and the interface circuit is configured to receive computer-executable instructions (the computer-executable instructions are stored in a memory, and may be directly read from the memory or may be read via another component) and send the computer-executable instructions to the processor.

In still another possible implementation, the communication apparatus further includes a communication interface, and the communication interface is configured to communicate with a module outside the communication apparatus.

It can be understood that the communication apparatus may be a chip or a chip system. When the communication apparatus is a chip system, the communication apparatus may include a chip, or may include a chip and another discrete device. This is not specifically limited in embodiments of this application.

This application further provides a computer-readable storage medium. The computer-readable storage medium stores computer programs or instructions. When the computer programs or instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art can understand that, for the purpose of convenient and brief description, for detailed working processes of the system, apparatuses, and units described above, refer to corresponding processes in the method embodiments. Details are not described herein again.

It can be understood that the system, apparatuses, and methods described in this application may be alternatively implemented in another manner. For example, the described apparatus embodiments are merely examples. For example, division into units is merely logical function division and may be other division during actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical from, or another form.

The units described as separate parts may be physically or not physically separated. To be specific, the units may be located at a same place or distributed on a plurality of network units. Parts displayed as units may be or may not be physical units. Some or all of the units may be selected depending on an actual requirement to achieve the objectives of the solutions of embodiments.

In addition, functional units in embodiments of this application may be integrated into one processing unit, each of the units may exist alone physically, or at least two units may be integrated into one unit.

All or some of the foregoing embodiments may be implemented by using software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the foregoing apparatuses.

Although this application is described herein with reference to embodiments, in a process of implementing this application that claims protection, a person skilled in the art can understand and implement other variations of the disclosed embodiments by viewing the accompanying drawings, the disclosed content, and the appended claims. In the claims, the term "comprising" (comprising) does not exclude another component or step, and "a" or "one" does not exclude "a plurality of". A single processor or another unit can implement several functions listed in the claims. Some measures are recorded in dependent claims different from each other, but this does not mean that these measures cannot be combined to produce great effects.

Although this application is described with reference to specific features and embodiments thereof, it is clear that various modifications and combinations may be made without departing from the spirit and scope of this application. Correspondingly, the specification and the accompanying drawings are merely example descriptions of this application defined by the appended claims, and are considered to cover any of and all modifications, variations, combinations, or equivalents within the scope of this application. It is clear that a person skilled in the art can make various modifications and variations to this application without departing from the spirit and scope of this application. In this way, this application is intended to cover these modifications and variations of this application provided that they fall within the scope defined by the following claims and equivalent technologies of this application.

## Claims

1. A power control method, wherein the method comprises:
sending an excitation signal to a terminal device at a first power; and
sending a communication signal to the terminal device at a second power, wherein the communication signal is used to bear information, and the second power is less than the first power.

2. The method according to claim 1, wherein the method further comprises:
receiving first indication information from a second device, wherein the first indication information indicates at least one of the first power and the second power.

3. The method according to claim 1, wherein the method further comprises:
receiving second indication information from a second device, wherein the second indication information indicates a first parameter, the first parameter comprises at least one of a first coexistence mode and a first coverage level, the first coexistence mode is a coexistence mode between a first device and a first communication network, and the first coverage level is used to indicate a size of a coverage area of the first device; and
determining at least one of the first power and the second power based on the first parameter.

4. The method according to claim 3, wherein the method further comprises:
receiving first configuration information from the second device, wherein the first configuration information is used to configure a correspondence between a parameter in a first parameter set and a power, and the first parameter set comprises the first parameter; and
the determining at least one of the first power and the second power based on the first parameter comprises:
determining the at least one of the first power and the second power based on the first parameter and the correspondence between a parameter in the first parameter set and a power.

5. The method according to claim 1, wherein the method further comprises:
receiving third indication information from a second device, wherein
the third indication information indicates at least one of the first power and a difference between the first power and the second power, and determining the second power based on the first power and the difference; or
the third indication information indicates at least one of the second power and a difference between the first power and the second power, and determining the first power based on the second power and the difference.

6. The method according to claim 1, wherein the method further comprises:
receiving fourth indication information from a second device, wherein the fourth indication information indicates a second parameter, the second parameter comprises at least one of a second coexistence mode and a second coverage level, the second coexistence mode is a coexistence mode between a first device and a first communication network, and the second coverage level is used to indicate a size of a coverage area of the first device; and
determining a third parameter based on the second parameter, wherein the third parameter comprises at least one of the first power and a difference between the first power and the second power, and determining the second power based on the first power and the difference; or
determining a fourth parameter based on the second parameter, wherein the fourth parameter comprises at least one of the second power and a difference between the first power and the second power, and determining the first power based on the second power and the difference.

7. The method according to claim 6, wherein the method further comprises: receiving second configuration information from the second device, wherein
the second configuration information is used to configure a correspondence between a parameter in a second parameter set and a parameter in a third parameter set, the second parameter set comprises the second parameter, and the third parameter set comprises the third parameter; and the determining a third parameter based on the second parameter comprises:
determining the third parameter based on the second parameter and the correspondence between a parameter in the second parameter set and a parameter in the third parameter set; or
the second configuration information is used to configure a correspondence between a parameter in a second parameter set and a parameter in a fourth parameter set, the second parameter set comprises the second parameter, and the fourth parameter set comprises the fourth parameter; and the determining a fourth parameter based on the second parameter comprises:
determining the fourth parameter based on the second parameter and the correspondence between a parameter in the second parameter set and a parameter in the fourth parameter set.

8. The method according to claim 3, 4, 6, or 7, wherein the sending an excitation signal to a terminal device at a first power comprises: sending the excitation signal to the terminal device on a first frequency domain resource at the first power; and
the sending a communication signal to the terminal device at a second power comprises: sending the communication signal to the terminal device on a second frequency domain resource at the second power; wherein
bandwidths of the first frequency domain resource and the second frequency domain resource are integer multiples of a bandwidth of a frequency domain resource unit of the first communication network.

9. A power control method, wherein the method comprises:
determining indication information; and
sending the indication information to a first device, wherein the indication information is used to determine a signal transmit power of the first device, the signal transmit power comprises at least one of a first power and a second power, the first power is a power of an excitation signal, the second power is a power of a communication signal, the communication signal is used to bear information, and the second power is not greater than the first power.

10. The method according to claim 9, wherein that the second power is not greater than the first power comprises: the second power is less than the first power.

11. The method according to claim 9 or 10, wherein the indication information is first indication information, and the first indication information indicates the signal transmit power.

12. The method according to claim 9 or 10, wherein the indication information is second indication information, the second indication information indicates a first parameter, the first parameter comprises at least one of a first coexistence mode and a first coverage level, the first coexistence mode is a coexistence mode between the first device and a first communication network, the first coverage level is used to indicate a size of a coverage area of the first device, and the first parameter is used to determine the signal transmit power.

13. The method according to claim 12, wherein the method further comprises:
sending first configuration information to the first device, wherein the first configuration information is used to configure a correspondence between a parameter in a first parameter set and a power, and the first parameter set comprises the first parameter.

14. The method according to claim 9 or 10, wherein the indication information is third indication information, and the third indication information indicates the first power and a difference between the first power and the second power; or
the third indication information indicates the second power and a difference between the first power and the second power.

15. The method according to claim 9 or 10, wherein the indication information is fourth indication information, the fourth indication information indicates a second parameter, the second parameter comprises at least one of a second coexistence mode and a second coverage level, the second coexistence mode is a coexistence mode between the first device and a first communication network, the second coverage level is used to indicate a size of a coverage area of the first device, the second parameter is used to determine a third parameter or a fourth parameter, the third parameter comprises at least one of the first power and a difference between the first power and the second power, and the fourth parameter comprises at least one of the second power and a difference between the first power and the second power.

16. The method according to claim 15, wherein the method further comprises:
sending second configuration information to the first device, wherein the second configuration information is used to configure a correspondence between a parameter in a second parameter set and a parameter in a third parameter set, the second parameter set comprises the second parameter, and the third parameter set comprises the third parameter; or
the second configuration information is used to configure a correspondence between a parameter in a second parameter set and a parameter in a fourth parameter set, the second parameter set comprises the second parameter, and the fourth parameter set comprises the fourth parameter.

17. A communication apparatus, wherein the communication apparatus comprises a transceiver module;
the transceiver module is configured to send an excitation signal to a terminal device at a first power; and
the transceiver module is further configured to send a communication signal to the terminal device at a second power, wherein the communication signal is used to bear information, and the second power is less than the first power.

18. The communication apparatus according to claim 17, wherein
the transceiver module is further configured to receive first indication information from a second device, wherein the first indication information indicates at least one of the first power and the second power.

19. The communication apparatus according to claim 17, wherein the communication apparatus further comprises a processing module;
the transceiver module is further configured to receive second indication information from a second device, wherein the second indication information indicates a first parameter, the first parameter comprises at least one of a first coexistence mode and a first coverage level, the first coexistence mode is a coexistence mode between the first device and a first communication network, and the first coverage level is used to indicate a size of a coverage area of the first device; and
the processing module is configured to determine at least one of the first power and the second power based on the first parameter.

20. The communication apparatus according to claim 19, wherein
the transceiver module is further configured to receive first configuration information from the second device, wherein the first configuration information is used to configure a correspondence between a parameter in a first parameter set and a power, and the first parameter set comprises the first parameter; and
that the processing module is configured to determine at least one of the first power and the second power based on the first parameter comprises:
the processing module is configured to determine the at least one of the first power and the second power based on the first parameter and the correspondence between a parameter in the first parameter set and a power.

21. The communication apparatus according to claim 17, wherein the communication apparatus further comprises a processing module;
the transceiver module is further configured to receive third indication information from a second device, wherein
the third indication information indicates at least one of the first power and a difference between the first power and the second power, and the processing module is configured to determine the second power based on the first power and the difference; or
the third indication information indicates at least one of the second power and a difference between the first power and the second power, and the processing module is configured to determine the first power based on the second power and the difference.

22. The communication apparatus according to claim 17, wherein the communication apparatus further comprises a processing module;
the transceiver module is further configured to receive fourth indication information from a second device, wherein the fourth indication information indicates a second parameter, the second parameter comprises at least one of a second coexistence mode and a second coverage level, the second coexistence mode is a coexistence mode between the first device and a first communication network, and the second coverage level is used to indicate a size of a coverage area of the first device; and
the processing module is further configured to: determine a third parameter based on the second parameter, wherein the third parameter comprises at least one of the first power and a difference between the first power and the second power, and determine the second power based on the first power and the difference; or
the processing module is configured to: determine a fourth parameter based on the second parameter, wherein the fourth parameter comprises at least one of the second power and a difference between the first power and the second power, and determine the first power based on the second power and the difference.

23. The communication apparatus according to claim 22, wherein the communication apparatus further comprises: the transceiver module is further configured to receive second configuration information from the second device, wherein
the second configuration information is used to configure a correspondence between a parameter in a second parameter set and a parameter in a third parameter set, the second parameter set comprises the second parameter, and the third parameter set comprises the third parameter; and that the processing module is configured to: determine a third parameter based on the second parameter comprises:
the processing module is configured to determine the third parameter based on the second parameter and the correspondence between a parameter in the second parameter set and a parameter in the third parameter set; or
the second configuration information is used to configure a correspondence between a parameter in a second parameter set and a parameter in a fourth parameter set, the second parameter set comprises the second parameter, and the fourth parameter set comprises the fourth parameter; and that the processing module is configured to: determine a fourth parameter based on the second parameter comprises:
the processing module is configured to determine the fourth parameter based on the second parameter and the correspondence between a parameter in the second parameter set and a parameter in the fourth parameter set.

24. The communication apparatus according to claim 19, 20, 22, or 23, wherein that the transceiver module is configured to send an excitation signal to a terminal device at a first power comprises: the transceiver module is configured to send the excitation signal to the terminal device on a first frequency domain resource at the first power; and
that the transceiver module is further configured to send a communication signal to the terminal device at a second power comprises: the transceiver module is further configured to send the communication signal to the terminal device on a second frequency domain resource at the second power; wherein
bandwidths of the first frequency domain resource and the second frequency domain resource are integer multiples of a bandwidth of a frequency domain resource unit of the first communication network.

25. A communication apparatus, wherein the communication apparatus comprises a transceiver module and a processing module;
the processing module is configured to determine indication information; and
the transceiver module is configured to send the indication information to a first device, wherein the indication information is used to determine a signal transmit power of the first device, the signal transmit power comprises at least one of a first power and a second power, the first power is a power of an excitation signal, the second power is a power of a communication signal, the communication signal is used to bear information, and the second power is not greater than the first power.

26. The communication apparatus according to claim 25, wherein that the second power is not greater than the first power comprises: the second power is less than the first power.

27. The communication apparatus according to claim 25 or 26, wherein the indication information is first indication information, and the first indication information indicates the signal transmit power.

28. The communication apparatus according to claim 25 or 26, wherein the indication information is second indication information, the second indication information indicates a first parameter, the first parameter comprises at least one of a first coexistence mode and a first coverage level, the first coexistence mode is a coexistence mode between the first device and a first communication network, the first coverage level is used to indicate a size of a coverage area of the first device, and the first parameter is used to determine the signal transmit power.

29. The communication apparatus according to claim 28, wherein
the transceiver module is further configured to send first configuration information to the first device, wherein the first configuration information is used to configure a correspondence between a parameter in a first parameter set and a power, and the first parameter set comprises the first parameter.

30. The communication apparatus according to claim 25 or 26, wherein the indication information is third indication information, and the third indication information indicates the first power and a difference between the first power and the second power; or
the third indication information indicates the second power and a difference between the first power and the second power.

31. The communication apparatus according to claim 25 or 26, wherein the indication information is fourth indication information, the fourth indication information indicates a second parameter, the second parameter comprises at least one of a second coexistence mode and a second coverage level, the second coexistence mode is a coexistence mode between the first device and a first communication network, the second coverage level is used to indicate a size of a coverage area of the first device, the second parameter is used to determine a third parameter or a fourth parameter, the third parameter comprises at least one of the first power and a difference between the first power and the second power, and the fourth parameter comprises at least one of the second power and a difference between the first power and the second power.

32. The communication apparatus according to claim 31, wherein
the transceiver module is further configured to send second configuration information to the first device, wherein the second configuration information is used to configure a correspondence between a parameter in a second parameter set and a parameter in a third parameter set, the second parameter set comprises the second parameter, and the third parameter set comprises the third parameter; or
the second configuration information is used to configure a correspondence between a parameter in a second parameter set and a parameter in a fourth parameter set, the second parameter set comprises the second parameter, and the fourth parameter set comprises the fourth parameter.

33. A communication apparatus, wherein the communication apparatus comprises at least one processor; and
the processor is configured to execute a computer program or instructions, so that the communication apparatus performs the method according to any one of claims 1 to 8, so that the communication apparatus performs the method according to any one of claims 9 to 16.

34. A computer-readable storage medium, wherein the computer-readable storage medium stores a computer program or instructions, and when the computer program or instructions are executed by a communication apparatus, the method according to any one of claims 1 to 8 or the method according to any one of claims 9 to 16 is implemented.

35. A computer program product, wherein when the computer program product runs on a communication apparatus, the method according to any one of claims 1 to 8 or the method according to any one of claims 9 to 16 is performed.
